(19) Europäisches Patentamt
European Patent Office
Office européen des brevets

(11) **EP 4 106 904 B1**

(12) **FASCICULE DE BREVET EUROPEEN**

(45) Date de publication et mention
de la délivrance du brevet:
**03.04.2024 Bulletin 2024/14**

(21) Numéro de dépôt: **21711009.7**

(22) Date de dépôt: **18.02.2021**

(51) Classification Internationale des Brevets (IPC):
**B01D 53/56** (2006.01)    **B01D 53/04** (2006.01)
**B01D 53/62** (2006.01)    **B01D 53/84** (2006.01)
**E01C 1/00** (2006.01)

(52) Classification Coopérative des Brevets (CPC):
**B01D 53/84; B01D 53/04; B01D 53/56;**
**B01D 53/62; E01C 1/005;** B01D 2253/102;
B01D 2253/104; B01D 2253/108; B01D 2253/1124;
B01D 2253/202; B01D 2255/20707;
B01D 2257/404; B01D 2257/504; B01D 2257/708;
B01D 2258/06;                                   (Cont.)

(86) Numéro de dépôt international:
**PCT/FR2021/050287**

(87) Numéro de publication internationale:
**WO 2021/165621 (26.08.2021 Gazette 2021/34)**

(54) **INSTALLATION ET PROCÉDÉ D'ÉPURATION D'AIR**

LUFTREINIGUNGSANLAGE UND -VERFAHREN

AIR PURIFICATION FACILITY AND METHOD

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **20.02.2020 FR 2001680**

(43) Date de publication de la demande:
**28.12.2022 Bulletin 2022/52**

(73) Titulaire: **Suez International**
**92040 Paris la Défense Cedex (FR)**

(72) Inventeurs:
• **DESCAMPS, Pierre Olivier**
**75003 Paris (FR)**
• **ROMAND, Clément**
**75011 Paris (FR)**

(74) Mandataire: **Lavoix**
**2, place d'Estienne d'Orves**
**75441 Paris Cedex 09 (FR)**

(56) Documents cités:
WO-A1-98/22201          CN-A- 108 043 220
DE-A1-102018 000 378    FR-A1- 3 061 030
JP-A- H09 136 015

(52) Classification Coopérative des Brevets (CPC):
(Cont.)
B01D 2259/40083; B01D 2259/40092; Y02A 50/20;
Y02C 20/40

(52) Classification Coopérative des Brevets (CPC):
(Cont.)
B01D 2259/40083; B01D 2259/40092; Y02A 50/20;
Y02C 20/40

## Description

### Domaine de l'invention

L'invention concerne une installation et un procédé d'épuration d'air, notamment en milieu urbain. Plus particulièrement, l'invention concerne une installation et un procédé permettant de séparer, capturer et/ou d'éliminer de l'air des particules, gaz et vapeurs, et notamment les polluants atmosphériques.

### Etat de la technique

La pollution de l'air fait partie des préoccupations principales des populations en matière d'environnement, en particulier dans les grandes villes, notamment en raison des effets qu'elle peut avoir sur la santé.

A ce jour, les polluants caractéristiques de la qualité de l'air sont les poussières, les oxydes d'azote (NOx, en particulier NO et $NO_2$), les composés organiques volatiles (COV), l'ozone ($O_3$), les oxydes de soufre (SOx, en particulier le dioxyde de soufre $SO_2$).

Il existe ainsi des systèmes d'épuration d'air pouvant être utilisés en milieu urbain, utilisant des dispositifs tels que filtres à particules, filtres à charbon actif et puits de carbone. L'efficacité d'un système de traitement de l'air porte sur le rendement de captation des polluants, le débit traité, sa consommation et la revalorisation des déchets.

On connait des installations combinant un filtre à particules et un filtre à charbon actif pour purifier l'air urbain, notamment destinées à des tunnels routiers. L'air traverse d'abord un filtre à particules formé d'un électrofiltre sous haute tension qui retient les particules, puis traverse un filtre en charbon actif pour réduire sa concentration en gaz polluants comme le dioxyde d'azote ($NO_2$), les hydrates de carbone ($C_mH_n$), l'ozone ($O_3$). Ce type d'installation est relativement efficace et permet d'atteindre de bonnes performances avec des débits importants, mais s'avère coûteuse en raison de la saturation du charbon actif qui doit alors être remplacé.

Un puits de carbone ou puits à dioxyde de carbone ($CO_2$) est un réservoir, naturel ou artificiel, qui absorbe le carbone de l'atmosphère et contribue à diminuer la quantité de dioxyde de carbone atmosphérique. La taille de tels réservoirs est variable. Les principaux puits de carbone naturels sont les océans, les sols (humus, tourbières) et certains milieux vitalistes (forêt en formation). Les puits de carbone considérés par les industriels comprennent des bioréacteurs, généralement fondés sur le processus de la photosynthèse, tels que les bioréacteurs décrits dans les documents WO2013/011448, WO2018/060197 et WO2019/121933. La demanderesse a notamment développé un procédé de régulation d'un système d'épuration d'air mettant en oeuvre un bioréacteur décrit dans le document WO2017/077061. Ces puits de carbone nécessitent un apport en azote apporté sous la forme d'une solution nutritive.

De manière générale, les puits de carbone présentent l'inconvénient de ne pas permettre de traiter des débits d'air importants.

Le document EP3446772 décrit un système de capture et de surveillance de polluants comprenant un système de type puits de carbone dans lequel est intégré un module de filtration de particules (filtre électrostatique). La totalité de l'air filtré par le filtre à particules est renvoyée dans le puits de carbone, si bien que le débit traité global reste faible. En outre, l'air purifié est rejeté par le système en hauteur et se retrouve dilué avec l'air environnant pollué.

Le document WO98/22201 décrit un procédé et un système de purification d'air contenant des oxydes d'azote, destiné à purifier l'air d'un tunnel routier ou d'un parking souterrain. Le procédé consiste à introduire l'air dans un dépoussiéreur électrostatique avant d'oxyder au moins en partie le monoxyde d'azote présent dans l'air en dioxyde d'azote. L'air est ensuite mis en contact avec un liquide absorbant les oxydes d'azote dans une tour de lavage. Le liquide chargé en oxydes d'azote quittant la tour de lavage est enfin traité dans un bioréacteur par des microorganismes utilisant la photosynthèse pour fixer les oxydes d'azote. Le document FR3061030 décrit un ensemble de dépollution d'une zone confinée dans lequel l'air est traité dans un filtre à particules avant d'entrer dans une tour de lavage dans laquelle il est lavé par de l'eau qui se charge en polluants chimiques miscibles dans l'air. L'eau et l'air sortant de la tour de lavage sont ensuite dépollués séparément dans des bioréacteurs distincts. L'inconvénient des procédés et systèmes décrits dans ces documents réside dans la mise en oeuvre d'une tour de lavage qui nécessite l'utilisation d'une quantité importante de liquide pour une empreinte au sol conséquente. Ce type de procédé et de système est ainsi peu adapté au traitement de débits d'air élevés, nécessaires pour traiter l'air dans des milieux non confinés. Par exemple, pour traiter 7500 $m^3$/h d'air urbain, une tour de lavage devrait mesurer 1,2 m de diamètre sur 4 m de haut, avec une consommation d'eau de l'ordre de 10 $m^3$/h, soit 1680$m^3$ par semaine.

Il existe ainsi un besoin pour des installations et procédés d'épuration d'air permettant de traiter efficacement des débits élevés, à moindre coût.

### Résumé de l'invention

Un premier objet de l'invention concerne une installation d'épuration d'air comprenant :

- une unité de filtration de particules comprenant une entrée d'air et une sortie d'air, ladite unité étant apte à retenir au moins en partie les particules présentes dans l'air entrant pour fournir en sortie un air à teneur réduite en particules,
- une unité de traitement comprenant au moins un agent de traitement, et :

  - deux circuits de fluide traversant l'au moins un agent de traitement :

    - un circuit d'air comprenant une entrée d'air en connexion de fluide avec la sortie d'air de l'unité de filtration et une sortie d'air, et
    - un circuit de fluide de lavage comprenant une entrée de fluide de lavage et une sortie de fluide de lavage,

  - un système de régulation du débit de circulation de fluide dans chacun des circuits configuré de sorte que lorsque le fluide de l'un des circuits circule, le fluide de l'autre circuit ne circule pas, l'au moins un agent de traitement étant apte à capturer au moins une partie des oxydes d'azote (NOx) présents dans l'air entrant pour fournir en sortie un air à teneur réduite en NOx, le fluide de lavage sortant de l'unité de traitement avec une teneur augmentée en NOx, notamment sous forme d'ions nitrates,

- une unité de captation du carbone et des oxydes d'azote comprenant au moins un bioréacteur contenant des microalgues capables de convertir par photosynthèse du dioxyde de carbone et des oxydes d'azote en composés organiques, l'unité de captation présentant une entrée d'air, une entrée de fluide en connexion de fluide avec la sortie de fluide de lavage de l'unité de traitement, une sortie d'air et une sortie de fluide, l'air sortant de l'unité de captation présentant une teneur réduite en carbone, notamment en $CO_2$, le fluide sortant de l'unité de captation présentant une teneur réduite en NOx, notamment sous forme d'ions nitrates.

Ainsi, selon l'invention, l'air à purifier traverse une unité de filtration et une unité de traitement permettant de réduire sa teneur en particules et en oxydes d'azotes. La réduction de la teneur en particules de l'air à purifier avant son entrée dans l'unité de traitement permet notamment d'augmenter la durée de vie de l'au moins un agent de traitement de l'unité de traitement, réduisant ainsi le coût de fonctionnement global de l'invention.

Par ailleurs, le circuit de fluide de lavage de l'unité de traitement permet de régénérer l'au moins un agent de traitement, ce fluide de lavage étant ensuite traité dans l'unité de captation par les microalgues qui vont consommer les oxydes d'azote lors de leur développement : ceci permet de valoriser les oxydes d'azote tout en augmentant la durée de vie de l'au moins un agent de traitement qui peut ainsi n'être remplacé que lorsque l'étape de lavage ne permet plus d'améliorer ses propriétés de captation. Notamment, l'au moins un agent de traitement peut avantageusement permettre de capturer non seulement les oxydes d'azote présents dans l'air entrant dans l'unité de traitement, mais aussi d'autres polluants tels que les COV, l'ozone, des oxydes de soufre (SOx), voire des particules. Le fluide de lavage permet alors de régénérer l'agent de traitement en le débarrassant des oxydes d'azote présents et d'un ou plusieurs de ces autres polluants éventuellement capturés par l'au moins un agent de traitement.

Enfin, l'air utilisé pour alimenter l'unité de captation sort de celle-ci avec une teneur réduite en dioxyde de carbone, et avantageusement également avec une teneur réduite en oxydes d'azote. En général, l'unité de captation du carbone et des oxydes d'azote permet également de capter au moins en partie les particules éventuellement présentes, de sorte que l'air qui en sort a une teneur réduite en particules le cas échéant.

L'installation selon l'invention permet ainsi de purifier l'air tout en valorisant les déchets azotés produits lors de cette purification.

L'air traité dans l'unité de captation peut provenir de l'air environnant l'installation, toutefois, avantageusement, il peut provenir de l'unité de filtration de sorte que l'air entrant dans l'unité de captation est au moins en partie débarrassé de particules. Ceci permet de limiter les risques de colmatage des équipements et aussi d'éviter un rejet de ces particules - qui contiennent en général des métaux lourds - dans des eaux usées arrivant dans les stations d'épurations.

Ainsi, dans un mode de réalisation préféré, l'installation peut comprendre une conduite de dérivation qui relie la sortie d'air de l'unité de filtration à l'entrée d'air de l'unité de captation, l'installation comprenant un dispositif de régulation du débit d'air circulant dans la conduite de dérivation. Ceci permet d'envoyer directement à l'unité de captation une partie de l'air à teneur réduite en particules fournie par l'unité de filtration. Ainsi, seule une partie de l'air sortant de l'unité de filtration peut être injectée dans l'unité de captation. On peut dès lors alimenter l'unité de captation avec un débit d'air faible mais suffisant pour combler les besoins des microalgues en dioxygène et dioxyde de carbone. Dès lors, la majeure partie de l'air à purifier passe uniquement par l'unité de filtration et l'unité de traitement mais ne passe pas par l'unité de captation dont le débit de traitement est faible. Ceci permet de traiter l'air avec un débit d'air important tout en valorisant les déchets azotés produits par cette purification.

De manière générale, l'installation selon l'invention peut comprendre une ou plusieurs des caractéristiques suivantes :

- un réservoir d'une solution de nutriments azotés en connexion de fluide avec l'unité de captation et un dispositif de régulation de débit régulant le débit en solution de nutriments azotés entrant dans l'unité de captation,
- un réservoir de stockage du fluide de lavage sortant de l'unité de traitement, situé en amont de l'unité de captation, notamment par rapport au sens de circulation du fluide de lavage,
- au moins un dispositif de régulation de pression prévu sur une conduite en aval de la sortie d'air de l'unité de filtration et en amont de l'entrée d'air d'une unité choisie parmi l'unité de traitement et l'unité de captation,
- l'unité de filtration comprend au moins un filtre choisi parmi un électrofiltre, notamment à ionisation positive, un filtre cyclonique, un filtre à voie humide, un filtre à média filtrant,
- l'au moins un agent de traitement de l'unité de traitement est un matériau adsorbant choisi parmi le charbon, notamment le charbon actif, un oxyde métallique, un oxyde d'aluminium, un oxyde de silicium, une zéolithe, une résine macroporeuse anionique,
- un système de gestion de l'unité de traitement relié au système de régulation du débit de circulation de fluide, le système de gestion étant configuré pour contrôler le débit du fluide de lavage à l'intérieur de l'unité de traitement en fonction de paramètres choisis parmi une durée de fonctionnement de l'unité de traitement, une information de saturation de l'unité de traitement, un état particulier de l'environnement,
- un système de régulation des conditions physicochimiques dudit au moins un bioréacteur,
- un système de commande du fonctionnement de chaque unité configuré pour arrêter le fonctionnement de l'unité de filtration et de l'unité de traitement lorsqu'une information de condition environnementale prédéterminée est reçue, et optionnellement, pour faire circuler le fluide de lavage au travers de l'unité de traitement,
- au moins un déflecteur d'air configuré pour diriger l'air dans une direction privilégiée. Ce déflecteur peut être agencé à proximité de, ou au travers d'une ouverture choisie parmi une entrée d'air à traiter de l'installation et une sortie d'air traité de l'installation.

Dans un mode de réalisation préféré, l'unité de filtration peut comprendre au moins un électrofiltre, de préférence à ionisation positive, et l'au moins un agent de traitement de l'unité de traitement peut être du charbon, notamment du charbon actif, ou de l'alumine, sous forme de poudre, de granulés, de copeaux ou de fibres, de préférence sous forme de fibres.

L'invention concerne également un procédé d'épuration d'air, notamment mis en oeuvre au moyen de l'installation selon l'invention, comprenant :

(a) une étape de filtration de particules au cours de laquelle on filtre au moins une partie des particules présentes dans l'air à épurer dans une unité de filtration pour fournir un air à teneur réduite en particules,

(b) une étape de traitement d'au moins une partie de l'air à teneur réduite en particules au cours de laquelle :

(i) on traite l'air à teneur réduite en particules en capturant au moins une partie des oxydes d'azote (NOx) présents pour fournir un air à teneur réduite en NOx, en faisant circuler l'air au travers d'au moins un agent de traitement dans une unité de traitement,

(ii) lorsque l'étape (i) n'est pas mise en oeuvre, on lave l'au moins un agent de traitement en faisant circuler un fluide de lavage au travers de l'au moins un agent de traitement de l'unité de traitement pour fournir un fluide de lavage avec une teneur augmentée en NOx, notamment sous forme d'ions nitrates,

(c) une étape de captation du carbone et des oxydes d'azote au cours de laquelle, dans une unité de captation comprenant au moins un bioréacteur contenant des microalgues capables de convertir par photosynthèse du dioxyde de carbone et des oxydes d'azote en composés organiques :

- on convertit au moins en partie le carbone présent dans un flux d'air entrant dans l'unité de captation pour fournir un air à teneur réduite en carbone, et avantageusement aussi en particules et en NOx et,
- on alimente l'unité de captation avec le fluide de lavage avec une teneur augmentée en NOx produit lors de l'étape (ii) et on convertit au moins en partie les oxydes d'azotes présents dans le fluide de lavage pour fournir un fluide à teneur réduite en NOx.

Dans un mode de réalisation préféré, une partie de l'air à teneur réduite en particules fournie par l'étape de filtration peut être envoyée directement à l'étape (c) de captation. Ceci permet de limiter le débit d'air entrant dans l'installation qui doit être traité par l'unité de captation.

De manière générale, le procédé peut également comprendre une ou plusieurs des caractéristiques suivantes :

- au cours de l'étape (c) de captation, on alimente l'unité de captation en solution de nutriments azotés,
- on augmente la pression de l'air avant une étape choisie parmi l'étape de traitement ou l'étape de captation,

- on stocke le fluide de lavage sortant de l'unité de traitement avant de l'envoyer à l'étape (c) de captation,
- l'étape (a) de filtration comprend au moins une étape de filtration choisie parmi une étape d'électrofiltration, notamment par ionisation positive, une étape de séparation cyclonique, une étape de filtration par voie humide, une étape de filtration sur média filtrant,
- l'au moins un agent de traitement utilisé lors de l'étape (b) de traitement est un matériau adsorbant choisi parmi le charbon, notamment le charbon actif, un oxyde métallique, un oxyde d'aluminium, un oxyde de silicium, une zéolithe, une résine macroporeuse anionique,
- au cours de l'étape (b) de traitement, on fait circuler le fluide de lavage à l'intérieur de l'unité de traitement en fonction de paramètres choisis parmi une durée de fonctionnement de l'unité de traitement, une information de saturation de l'unité de traitement, un état particulier de l'environnement,
- au cours de l'étape (c) de captation, on régule des conditions physicochimiques dudit au moins un bioréacteur
- on suspend les étapes de filtration et de traitement en arrêtant l'unité de filtration et l'unité de traitement lorsqu'une information de condition environnementale est reçue, et optionnellement, on fait circuler le fluide de lavage au travers de l'unité de traitement.

## Description des figures

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

La figure 1 représente schématiquement une installation de purification d'air selon un mode de réalisation de l'invention.
La figure 2 représente une vue en perspective d'une installation de purification d'air selon un mode de réalisation de l'invention.
La figure 3 représente schématiquement en vue de dessus les orientations des abris bus testés dans l'exemple.
La figure 4 représente schématiquement en perspective l'abri bus selon la configuration 1 de l'exemple.
La figure 5 représente schématiquement en perspective l'abri bus de selon la configuration 2 de l'exemple.

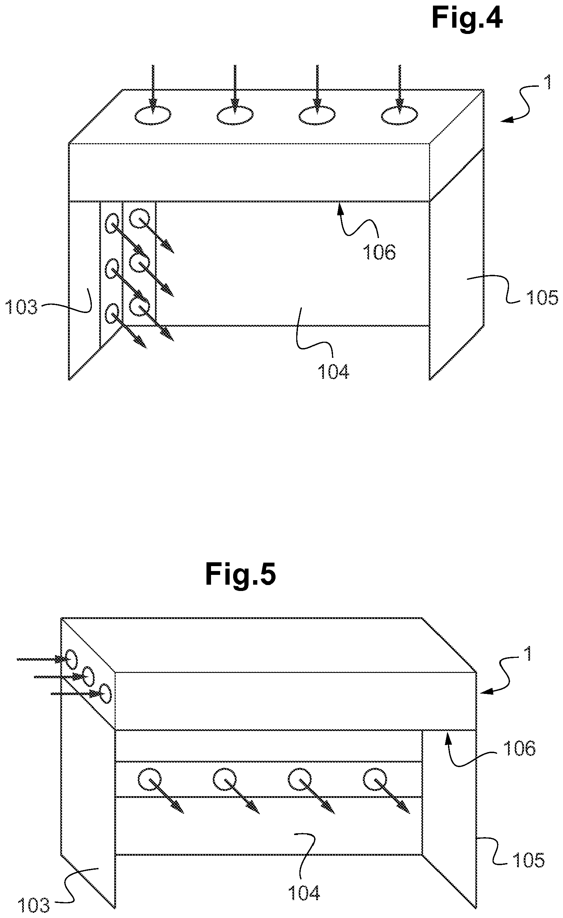

Sur les figures 4 et 5, les flèches représentent l'air entrant et sortant.

## Description détaillée de l'invention

### Définitions

Par « composé organique volatil » (COV), on entend tout composé organique ayant une pression de vapeur saturante de 0,01 kPa ou plus à une température de 293,15 K et à la pression atmosphérique.
Par « composé organique », on entend tout composé contenant au moins l'élément carbone et une liaison carbone-hydrogène (C-H) et/ou une liaison carbone-halogène. Au sens de la présente invention, un atome d'halogène s'entend d'un atome de chlore, de brome, d'iode ou de fluor, notamment un atome de chlore. Un « composé organique » au sens de l'invention peut également comprendre les atomes suivants oxygène, soufre, phosphore, silicium ou azote. Les oxydes de carbone et les carbonates et bicarbonates inorganiques ne sont pas des « composés organiques » au sens de l'invention.

### Description de l'installation

L'installation et le procédé selon l'invention sont particulièrement adaptés à la purification de l'air en zone urbaine, notamment dans les zones souterraines (métro, tunnels, ...) ou encore dans les zones fréquentées par les personnes fragiles tels que les enfants et les personnes âgées (parcs, cours d'école, ...).
L'installation selon l'invention comprend une unité de filtration de particules, une unité de traitement et une unité de captation décrites ci-après.

### Unité de filtration de particules

L'unité de filtration de particules permet de réaliser une filtration des particules présentes dans l'air circulant au travers de l'unité de filtration. Autrement dit, cette unité est apte à retenir au moins en partie les particules présentes dans l'air entrant pour fournir en sortie un air à teneur réduite en particules. Avantageusement, l'unité de filtration peut permettre une séparation efficace des particules de diamètre de $0,01\,\mu m$ à $50\,\mu m$, notamment des particules de diamètre de 0,1 à 50$\mu$m, d'un flux gazeux.

L'unité de filtration comprend ainsi une entrée d'air et une sortie d'air.

L'unité de filtration peut comprendre au moins un filtre choisi parmi un électrofiltre, un filtre cyclonique (encore appelé « cyclone » ou « séparateur cyclonique »), un filtre à voie humide, un filtre à média filtrant, notamment un media filtrant fibreux.

Le filtre à voie humide est un filtre dans lequel l'air est purifié par mélange avec une solution de lavage, les particules et poussières étant retenues dans la solution de lavage. Cette dernière peut être de l'eau ou une solution contenant un réactif réagissant avec des polluants de l'air à purifier. Ce réactif peut être une base, un acide, un oxydant ou un réducteur. On utilisera de préférence de l'eau.

Le filtre à média filtrant peut comprendre un média filtrant composé d'éléments filtrants sous forme de granulés (par exemple du sable, du charbon actif, de l'alumine ou tout autre élément filtrant) ou un média filtrant fibreux.

Le filtre à média filtrant fibreux peut se présenter sous la forme d'un filtre plan, d'un filtre à média plissé à plis profonds ou d'un filtre à poches, de préférence un filtre à poches.

Dans un mode de réalisation préféré, l'unité de filtration comprend au moins un électrofiltre.

Un électrofiltre, également appelé précipitateur électrostatique ou encore filtre électrostatique, utilise les forces électriques pour séparer des particules solides d'un gaz. De manière usuelle, le gaz à traiter traverse un champ électrique provoquant l'ionisation des particules en particules positives (ou négatives), puis passe entre une ou plusieurs plaques chargées négativement (ou positivement) qui attirent les particules les chargées. Les particules adhèrent ainsi aux plaques. Elles peuvent éventuellement tomber et être récupérées dans un collecteur. Le gaz traité est couramment débarrassé de 30 % à 98 % en masse des particules solides qu'il contenait. Un tel filtre permet une séparation efficace des particules de diamètre de 0,01$\mu$m à 50$\mu$m, notamment des particules de diamètre de 0,1 à 50$\mu$m.

L'électrofiltre peut être du type à ionisation positive ou à ionisation négative. Toutefois, de préférence, l'installation peut comprendre un ou plusieurs électrofiltres à ionisation positive, ce qui permet de limiter la génération d'ozone.

De manière classique, cette unité de filtration peut comprendre une enceinte, notamment étanche à l'air, à l'intérieur de laquelle peuvent être agencés un ou plusieurs modules de filtration, chaque module de filtration comprenant un ou plusieurs filtres d'un même type. L'entrée et la sortie d'air de l'enceinte peuvent chacune comprendre une ou plusieurs ouvertures en fonction des dimensions de l'enceinte. Notamment une entrée d'air et une sortie d'air par module de filtration peuvent être prévues, lesquelles sont en connexion de fluide avec respectivement l'entrée d'air et la sortie d'air de l'enceinte.

Unité de traitement

L'unité de traitement comprend au moins un agent de traitement et deux circuits de fluide traversant l'au moins un agent de traitement.

Un premier circuit de fluide, appelé circuit d'air, est destiné à faire circuler de l'air au travers de l'au moins un agent de traitement. Ce circuit d'air comprend une entrée d'air en connexion de fluide avec la sortie d'air de l'unité de filtration et une sortie d'air, pour le rejet de l'air purifié dans l'atmosphère. Ainsi, l'air circulant au travers de l'au moins un agent de traitement présente une teneur réduite en particules. De préférence, l'entrée d'air du circuit d'air est reliée directement à la sortie d'air de l'unité de filtration.

Un deuxième circuit de fluide, appelé circuit de fluide de lavage, est destiné à faire circuler un fluide de lavage au travers de l'au moins un agent de traitement afin de régénérer ce dernier en le débarrassant au moins en partie des composants qu'il a retenus et en général aussi des autres polluants retenus par l'au moins un agent de traitement. Ce circuit de fluide de lavage comprend une entrée de fluide de lavage et une sortie de fluide de lavage.

L'unité de traitement comprend également un système de régulation du débit de circulation de fluide dans chacun des circuits configuré de sorte que lorsque le fluide de l'un des circuits circule, le fluide de l'autre circuit ne circule pas. Le système de régulation permet notamment de contrôler la circulation de fluide (air ou fluide de lavage) à l'intérieur de chacun des circuits. Ce système de régulation peut comprendre une ou plusieurs vannes, un ou plusieurs débitmètres ou tout autre dispositif approprié permettant de contrôler les débits de fluide.

Lorsque l'unité de traitement est à l'arrêt, aucun fluide ne circule.

L'au moins un agent de traitement présent dans l'unité de traitement est apte à capturer au moins une partie des oxydes d'azote (NOx) présents dans l'air entrant pour fournir en sortie de l'unité de traitement un air à teneur réduite en NOx, le fluide de lavage sortant de l'unité de traitement avec une teneur augmentée en NOx, notamment sous forme d'anions nitrates. Il est en général également apte à capturer d'autres polluants (COV, ozone, oxydes de soufre, particules).

Avantageusement, l'au moins un agent de traitement peut capturer les oxydes d'azote, voire les autres polluants, par adsorption.

Un tel agent de traitement peut être un matériau adsorbant, notamment un agent adsorbant minéral ou organique, de préférence un agent adsorbant minéral.

Un matériau adsorbant minéral utilisable peut être choisi parmi le charbon, le charbon actif, un oxyde métallique, un oxyde d'aluminium, notamment de l'alumine ($Al_2O_3$), un oxyde de silicium, notamment la silice ($SiO_2$), un catalyseur activé au dioxyde de titane $TiO_2$, une zéolithe, par exemple un aluminosilicate, ou une combinaison de ceux-ci. Le matériau adsorbant minéral pourra notamment être activé au dioxyde de titane ($TiO_2$).

Un matériau adsorbant organique utilisable peut être une résine macroporeuse anionique, notamment une résine anionique forte.

De manière générale, l'au moins un agent de traitement de l'unité de traitement, notamment lorsqu'il s'agit d'un adsorbant minéral, peut être sous forme de poudre, de granulés ou de fibres, éventuellement tressées de préférence sous forme de fibres.

De préférence, l'au moins un agent de traitement est du charbon, notamment du charbon actif, ou de l'alumine, sous forme de copeaux, granulés, poudre, fibres ou de fibres tressées.

L'agent de traitement utilisé, quel qu'il soit, pourra être utilisé en combinaison avec n'importe lequel des filtres envisageables de l'unité de filtration précédemment listés. Toutefois, dans un mode de réalisation préféré, l'agent de traitement est du charbon, notamment du charbon actif, ou de l'alumine et l'unité de filtration comprend au moins un électrofiltre, notamment un électrofiltre à ionisation positive.

Le charbon actif est un matériau constitué essentiellement de matière carbonée à structure poreuse. Il peut être produit de manière connue par pyrolyse de précurseurs d'origine naturelle (bois, écorce, coques de noix de coco, coton, matières organiques d'origines diverses, etc.) ou d'origine synthétique (polyacrylonitrile (PAN), fibres aramides, ...) comportant déjà une part importante de carbone, cette étape de pyrolyse étant suivie d'une étape d'activation chimique ou physique. Le charbon retient alors les molécules des gaz et des liquides.

Tel que déjà mentionné, un agent de traitement adsorbant, tel que le charbon, le charbon actif ou l'alumine, permet non seulement de capter par adsorption les oxydes d'azotes (NO, $NO_2$), mais aussi d'autres constituants gazeux tels que les composés organiques volatiles (COV, ozone, SOx). On notera que cet agent de traitement adsorbe également le dioxygène ($O_2$) conduisant à une oxydation des oxydes d'azote $NO_2$/NO en anion nitrates $NO_3^-$. Lors du lavage de l'agent de traitement par le fluide de lavage, les ions nitrates $NO_3^-$ adsorbés sont évacués sous forme d'acide nitrique, $HNO_3$.

L'au moins un agent de traitement peut être contenu dans un module de filtration classique, par exemple sous forme de cassette plane, de cartouche cylindrique ou toute autre forme appropriée. De tels filtres sont connus et disponibles dans le commerce.

La sortie de fluide de lavage de l'unité de traitement peut être reliée directement à l'entrée de fluide de l'unité de captation. Toutefois, avantageusement, l'installation peut comprendre un réservoir de stockage du fluide de lavage situé entre la sortie de fluide de lavage de l'unité de traitement et l'entrée de fluide de l'unité de captation. Le réservoir est alors en connexion de fluide avec la sortie de fluide de lavage de l'unité de traitement et l'entrée en fluide de lavage de l'unité de captation. Le fluide de lavage ne circulant pas en même temps que l'air au travers de l'unité de traitement, un réservoir de stockage permet de continuer à alimenter l'unité de captation en fluide de lavage même lorsque ce dernier ne circule pas.

Avantageusement, l'installation peut comprendre au moins un dispositif de régulation de pression prévu sur une conduite en aval de la sortie d'air de l'unité de filtration et en amont de l'entrée d'air de l'unité de traitement. Ceci peut permettre de compenser les éventuelles pertes de pression résultant du passage de l'air au travers de l'unité de filtration ou de traitement. Ce dispositif de régulation peut être un simple ventilateur (ou soufflante).

Avantageusement, l'installation peut comprendre un système de gestion de l'unité de traitement relié au système de régulation du débit de circulation de fluide, le système de gestion étant configuré pour contrôler le débit du fluide de lavage à l'intérieur de l'unité de traitement en fonction de paramètres choisis parmi une durée de fonctionnement de l'unité de traitement, une information de saturation de l'unité de traitement, un état particulier de l'environnement. Ainsi, le lavage de l'au moins un agent de traitement peut être réalisé uniquement lorsque cela s'avère nécessaire, notamment lorsqu'une information de saturation de cet agent de traitement est identifiée et que sa régénération s'avère nécessaire, et/ou lorsque la purification de l'air n'est pas nécessaire, par exemple en absence de personnes à proximité de l'installation, notamment lorsqu'il fait nuit ou que les conditions climatiques sont défavorables (pluie, vent, ...). L'information de saturation peut être une estimation, par exemple déterminée au préalable à partir de tests sur banc d'essai dans les conditions de fonctionnement usuelles de l'unité de traitement. Le système de gestion de l'unité de traitement pourra également être configuré pour contrôler le débit d'air circulant dans le circuit d'air de l'unité de traitement.

De manière classique, l'unité de traitement peut comprendre une enceinte, notamment étanche à l'air et à l'eau, à l'intérieur de laquelle peuvent être agencés un ou plusieurs modules de traitement, chaque module de traitement étant également étanche à l'air et à l'eau et comprenant l'agent de traitement.

L'entrée et la sortie d'air de l'enceinte peuvent chacune comprendre une ou plusieurs ouvertures en fonction des dimensions de l'enceinte. Notamment une entrée d'air et une sortie d'air par module de traitement peuvent être prévues, lesquelles sont en connexion de fluide avec respectivement l'entrée d'air et la sortie d'air de l'enceinte.

De manière similaire, l'entrée et la sortie de fluide de lavage de l'enceinte peuvent chacune comprendre une ou plusieurs ouvertures en fonction des dimensions de l'enceinte. Notamment une entrée de fluide de lavage et une sortie de fluide de lavage par module de traitement peuvent être prévues, lesquelles sont en connexion de fluide avec respectivement l'entrée de fluide de lavage et la sortie de fluide de lavage de l'enceinte.

Unité de captation

L'unité de captation de l'installation est une unité de captation du carbone et des oxydes d'azote.

Cette unité de captation comprend au moins un bioréacteur contenant des microalgues capables de convertir par photosynthèse le carbone du dioxyde de carbone et des oxydes d'azote (notamment sous forme de nitrates) en composés organiques. Ces composés organiques, produits par le métabolisme des microalgues, ne sont pas relâchés dans l'atmosphère de sorte que le flux d'air sortant de l'unité de captation est purifié.

Les microalgues sont définies comme étant des organismes unicellulaires ou pluricellulaires indifférenciés. Elles constituent un sous-ordre des Eucaryotes ou des Procaryotes et sont capables de réaliser la photosynthèse oxygénique. Cette réaction assure la transformation du carbone inorganique en énergie chimique en captant l'énergie lumineuse selon l'équation :

$$nCO_2 + nH_2O \rightarrow (CH_2O)n + nO_2 \qquad (1)$$

Le bioréacteur contient un milieu de culture qui doit satisfaire les besoins en éléments majeurs des microalgues, à savoir C, H, N, O, P et S et en microéléments (éléments traces).

Le carbone est le constituant majeur des microalgues (il représente environ 50% masse de la biomasse sèche des microalgues). Le carbone est ici apporté par le $CO_2$ contenu dans l'air.

L'azote compte pour 7 à 10 % en masse de la composition de la biomasse. C'est un élément indispensable au métabolisme cellulaire qui intervient notamment dans la synthèse de protéines fonctionnelles et structurelles. Il est ici apporté notamment par les oxydes d'azote oxydés (sous forme d'ions nitrates) présents dans le fluide de lavage.

Les autres éléments sont apportés par le milieu de culture.

Ce milieu de culture sera ainsi choisi en fonction des microalgues utilisées afin de favoriser leur croissance. Le choix des microalgues utilisées dépendra de l'utilisation recherchée de la biomasse ainsi obtenue.

L'unité de captation présente une entrée d'air, une entrée de fluide en connexion de fluide avec la sortie de fluide de lavage de l'unité de traitement, une sortie d'air et une sortie de fluide, l'air sortant de l'unité de captation présentant ainsi une teneur réduite en carbone, notamment en $CO_2$, et avantageusement une teneur réduite en NOx et en particules, le fluide sortant de l'unité de captation présentant une teneur réduite en NOx.

L'entrée de fluide de l'unité de captation peut également être connectée à un réseau d'alimentation en eau ou l'unité de captation peut comprendre une autre entrée de fluide connectée à un réseau d'alimentation en eau. Ceci permet d'alimenter le ou les bioréacteurs en eau, notamment lorsque la quantité de fluide de lavage n'est pas suffisante pour les alimenter.

Avantageusement, l'installation peut comprendre au moins un dispositif de régulation de pression prévu sur une conduite en aval de la sortie d'air de l'unité de filtration et en amont de l'entrée d'air de l'unité de captation. Ceci peut permettre de compenser les éventuelles pertes de pression résultant du passage de l'air au travers de l'unité de filtration et/ou de l'unité de traitement. Le dispositif de régulation est par exemple un compresseur.

Avantageusement, l'installation peut comprendre un réservoir d'une solution de nutriments azotés en connexion de fluide avec l'unité de captation et un dispositif de régulation de débit régulant le débit de la solution de nutriments azotés entrant dans l'unité de captation. De préférence, les nutriments azotés sont des ions nitrates.

Il est ainsi possible d'alimenter l'unité de captation en nutriments azotés, notamment lorsqu'il n'y a pas suffisamment de fluide de lavage.

Dans un mode de réalisation préféré, l'installation peut comprendre une conduite de dérivation qui relie, notamment directement, la sortie d'air de l'unité de filtration à l'entrée d'air de l'unité de captation, l'installation comprenant un dispositif de régulation du débit d'air circulant dans la conduite de dérivation. Ceci permet d'envoyer directement à l'unité de captation une partie de l'air à teneur réduite en particules fournie par l'étape de filtration. La quantité d'air à teneur réduite en particules envoyée à l'unité de captation est de préférence suffisante pour combler les besoins des microalgues en dioxygène et dioxyde de carbone. Cette quantité d'air est relativement faible de sorte que la majeure partie de l'air à purifier passe uniquement par l'unité de filtration et l'unité de traitement mais ne passe pas par l'unité de captation dont le débit de traitement est faible.

Avantageusement, l'installation peut comprendre un système de régulation des conditions physicochimiques dudit au moins un bioréacteur. Ce système peut être relié à une pluralité de capteurs des conditions physicochimiques dudit au moins un bioréacteur, notamment de son milieu de culture. De tels systèmes de régulation sont connus et pilotent le bioréacteur en contrôlant des paramètres de fonctionnement du bioréacteur par une pluralité de capteurs appropriés. Ceci permet d'optimiser la culture des microalgues et par conséquent la consommation des polluants par ces dernières.

Le système de régulation et les paramètres utilisés pour le pilotage pourront être similaires à ceux décrits dans le document WO2017077061 A1.

L'unité de captation pourra comprendre un ou plusieurs bioréacteurs comprenant chacun une entrée et une sortie d'air et une entrée et une sortie de fluide de lavage, lesquelles sont en connexion de fluide avec l'entrée et la sortie d'air et l'entrée et la sortie de fluide de lavage de l'unité de captation. Le ou les bioréacteurs pourront être agencés à l'intérieur d'une enceinte. A titre d'exemple, on pourra utiliser un bioréacteur du type de ceux décrits dans les documents WO2013011448A1, WO2018060197A1, WO2019121933A.

On pourra également prévoir un dispositif de vidange des microalgues présentes dans l'unité de captation. Ceci permet notamment de renouveler les microalgues présentes dans l'unité de captation afin de maintenir les besoins en $CO_2$ de celles-ci constants. La vidange des microalgues et l'introduction de microalgues fraiches à l'intérieur de l'unité de captation, notamment les quantités extraites/introduites et la fréquence de ces extractions/introductions, pourront être gérées par le système de régulation précédemment décrit.

Les eaux de vidange contenant les microalgues peuvent être envoyées en tout ou partie dans un réseau d'assainissement de l'eau, tel que décrit par exemple dans le document WO2017077061. Alternativement ou en combinaison, les eaux de vidange ou, après séchage, les microalgues qu'elles contiennent, peuvent être utilisées comme amendement organique pour végétaux. Ou encore les microalgues contenues dans ces eaux de vidange peuvent être envoyées en méthanisation.

## Structure de l'installation

L'installation pourra être contenue dans une enceinte pourvue d'ouvertures : au moins une ouverture formant une entrée d'air à traiter, notamment pour l'unité de filtration, voire pour l'unité de captation, et au moins deux ouvertures formant des sorties d'air traité, dont l'une est une sortie d'air de l'unité de traitement et l'autre une sortie d'air de l'unité de captation.

En variante ou en combinaison, on pourra prévoir une ou plusieurs entrées d'air à traiter distantes de l'enceinte reliées à l'entrée de l'unité de filtration et/ou l'entrée d'air de l'unité de captation. Ceci peut permettre de capter un air moins pollué que l'air environnant l'installation.

Avantageusement, l'installation peut être équipée d'au moins un déflecteur d'air configuré pour diriger l'air dans une direction privilégiée. Un déflecteur peut être agencé à proximité de, ou au travers de l'au moins une entrée d'air à traiter de l'installation. En variante ou en combinaison, un déflecteur peut être agencé à proximité de, ou au travers d'une sortie d'air traité de l'installation, notamment au moins de la sortie d'air de l'unité de traitement et de préférence aussi de la sortie d'air de l'unité de captation.

Au moins un déflecteur d'air peut équiper l'au moins une entrée d'air à traiter, l'au moins une sortie d'air traité ou les deux.

L'au moins un déflecteur peut comprendre une pluralité de lamelles orientables s'étendant au travers d'une ouverture formant l'entrée ou la sortie d'air.

En variante ou en combinaison, l'au moins un déflecteur d'air peut comprendre au moins une paroi disposée à proximité d'une ouverture, en particulier l'ouverture formant l'au moins une sortie d'air filtré, l'au moins une paroi définissant un espace semi confiné. Ceci permet de diriger l'air purifié vers une zone particulière ciblée définie en partie par cet espace semi-confiné. On crée ainsi une sorte de bulle d'air purifié à l'intérieur de cet espace semi-confiné et à proximité immédiate de celui-ci.

On notera qu'un déflecteur sous la forme d'une paroi peut également être prévu à proximité d'une ouverture formant une entrée d'air, par exemple pour diriger l'air avoisinant vers cette ouverture. La paroi peut alors présenter une forme d'entonnoir en direction de l'ouverture ou de manière plus générale être dirigée vers celle-ci. L'ouverture peut elle-même être pourvue d'un déflecteur d'air du type à lamelles.

Les sorties d'air de l'unité de traitement et de l'unité de captation peuvent avantageusement déboucher de l'au moins une paroi afin de rejeter l'air purifié à l'intérieur de l'espace semi-confiné. On notera que ces sorties d'air peuvent ellesmêmes être pourvues de déflecteur d'air de type à lamelles.

Notamment, l'installation pourra comprendre au moins une paroi s'étendant verticalement, notamment fixée au sol, et au moins une paroi horizontale.

Les parois peuvent par exemple être agencées de manière à former un abri, notamment de type abri bus. On peut ainsi prévoir trois parois fixées au sol perpendiculairement à celui-ci et agencées en U les unes par rapport aux autres, et une quatrième paroi formant un toit disposé au sommet des trois parois, parallèlement au sol.

Les sorties d'air de l'unité de traitement et de l'unité de captation peuvent alors déboucher d'une ou plusieurs de ces parois, à l'intérieur de l'abri, par exemple à proximité d'une zone de jonction entre une paroi verticale et la paroi formant un toit et/ou à proximité de la jonction de deux parois verticales.

En variante, seules deux parois verticales fixées au sol et surmontées d'une paroi formant toit pourraient être prévues.

Ou encore, une unique paroi verticale fixée au sol et surmontée d'une paroi formant toit pourrait être prévue, la paroi verticale unique présentant par exemple une forme courbe ouverte, par exemple une forme de portion de cylindre.

On comprend ainsi que l'agencement de déflecteurs d'air sous forme de paroi(s) ainsi que la disposition d'ouvertures de sortie de l'air purifié, éventuellement équipées de déflecteurs d'air de type à lamelles, pourront être modifiés en fonction des dimensions de la zone semi-confinée souhaitée ou de l'emplacement de l'installation, cette dernière pouvant être déjà positionnée à l'intérieur dans un espace semi-confiné tel qu'un hall de bâtiment, un couloir, ou autre. Ceci pourra par exemple être déterminé par des simulations aérauliques utilisant la méthode des éléments finis permettant de simuler la zone dans laquelle l'air sortant de l'installation est susceptible d'être présent en fonction des conditions environnementales (direction et force du vent, pluie, ...) .

L'installation selon l'invention permet de fournir un débit d'air purifié notable. A titre d'exemple, on pourra ainsi atteindre, avec des dimensions appropriées des unités de l'installation, des débits de 1000 à 10000m$^3$ par heure. Avec de tels débits, il est possible de créer autour de l'installation une zone d'air purifiée, la forme et les dimensions de cette zone pouvant dépendre des conditions environnementales (vent, pluie) et aussi de la forme et de l'agencement des parois.

Système de commande

L'installation peut comprendre un système de commande du fonctionnement de chaque unité configuré pour arrêter le fonctionnement de l'unité de filtration et de l'unité de traitement lorsqu'une information de condition environnementale prédéterminée est reçue.

Ceci permet de limiter les coûts de fonctionnement de l'installation en réduisant son temps d'utilisation. On peut alors en effet espacer le lavage de l'au moins un agent de traitement, le remplacement de celui-ci, voire le nettoyage de l'unité de filtration.

La condition environnementale prédéterminée peut être reçue de capteurs spécifiques ou de données publiques, fournissant des informations sur la qualité de l'air, la vitesse du vent, la présence de pluie, sur la période de la journée (nuit/jour).

A titre d'exemple, on pourra ainsi arrêter le fonctionnement des unités de filtration et de traitement lorsque la qualité de l'air est bonne, par exemple lorsque sa teneur en un ou plusieurs polluants choisi parmi des particules, des oxydes d'azotes, du $CO_2$ est inférieure à un seuil, ce seuil pouvant être fixé par des autorités sanitaires ou autre.

De manière similaire, on pourra arrêter le fonctionnement des unités de filtration et de traitement lorsque les conditions de purification de l'air sont dégradées, notamment en présence de pluie, ou lorsque la vitesse du vent est telle que l'air purifié est dispersé très rapidement au sein de l'air non purifié de sorte qu'il n'y a pas formation d'une zone d'air purifiée. Une valeur seuil de vitesse du vent au-delà de laquelle il n'y a pas de formation d'une zone d'air purifiée pourra être déterminée par simulation et/ou des tests in situ.

Enfin, on pourra arrêter le fonctionnement des unités de filtration et de traitement lorsqu'il fait nuit ou lorsqu'il n'y a personne dans la zone d'air purifiée.

L'installation peut ainsi être équipée d'un ou plusieurs capteurs choisis parmi un capteur de vitesse du vent, un capteur de présence, un capteur de pluie, un capteur d'ensoleillement, un capteur de dioxyde de carbone, un capteur d'oxydes d'azote, un capteur de particules. En variante ou en combinaison, l'installation peut être reliée à une installation comprenant un ou plusieurs de ces capteurs, par exemple une station météorologique pour recevoir les informations.

Le système de commande peut ainsi être configuré pour arrêter les unités de filtration et de traitement lorsqu'au moins une information de condition environnementale est reçue, choisie par exemple parmi une information de pluie, de vent, de nuit et de bonne qualité de l'air. Lors de cet arrêt, l'unité de captation continue à fonctionner afin de maintenir en vie la culture algale.

Le système de commande peut également être configuré pour faire circuler le fluide de lavage, et optionnellement un fluide de séchage, au travers de l'unité de traitement uniquement lorsque les unités de filtration et de traitement sont à l'arrêt. Il peut alors être relié au système de régulation du débit de circulation de fluide de l'unité de traitement ou au système de gestion de l'unité de traitement.

Le fluide de séchage, typiquement de l'air, pourra notamment circuler via le circuit d'air de l'unité de traitement.

Procédé d'épuration d'air

Le procédé d'épuration selon l'invention comprend une étape (a) de filtration de particules, une étape (b) de traitement et une étape (c) de captation.

Les étapes (a) et (b) sont réalisées successivement, de préférence directement l'une après l'autre, et permettent de traiter l'air et de le débarrasser des particules et des oxydes d'azote, voire en partie aussi des COV, des SOx et de l'ozone.

L'étape (c) de captation est essentiellement une étape de valorisation des déchets azotés sortant de l'unité de traitement, mais permet également un traitement de l'air.

### Etape (a) de filtration de particules

Au cours de cette étape, on filtre au moins une partie des particules présentes dans l'air à épurer dans une unité de filtration pour fournir un air à teneur réduite en particules. L'unité de filtration est par exemple telle que précédemment décrite en référence à l'installation de purification de l'invention.

Avantageusement, l'étape (a) de filtration peut comprendre au moins une étape choisie parmi une étape d'électrofiltration, notamment par ionisation positive, une étape de séparation cyclonique, une étape de filtration par voie humide, une étape de filtration sur média filtrant fibreux. Les filtres utilisables peuvent être tels que déjà décrits.

Le débit d'air traité au cours de cette étape peut être relativement important, en particulier lorsqu'il s'agit d'électrofiltration, cette technique produisant une faible perte de charge. Le débit d'air dépend ainsi essentiellement du dimensionnement des unités de filtration.

On peut par exemple atteindre des débits d'air jusque 8000m$^3$/heure selon le dimensionnement de l'installation, avec un abattement des particules de 30 à 98%masse.

### Etape (b) de traitement

Cette étape de traitement est réalisée sur l'air à teneur réduite en particules sortant de l'unité de filtration.

Au cours de cette étape :

(i) on traite l'air à teneur réduite en particules en capturant au moins une partie des oxydes d'azote (NOx) présents pour fournir un air à teneur réduite en NOx. Ce traitement est effectué en faisant circuler l'air au travers d'au moins un agent de traitement dans une unité de traitement. L'air entrant présentant une teneur réduite, voire quasiment nulle, en particules, l'au moins un agent de traitement n'est pas encrassé par les particules ce qui permet d'augmenter sa durée d'utilisation et d'espacer son remplacement.

(ii) Lorsque l'étape (i) n'est pas mise en oeuvre, on lave l'au moins un agent de traitement en faisant circuler un fluide de lavage au travers de l'agent de traitement de l'unité de traitement pour fournir un fluide de lavage avec une teneur augmentée en NOx. Autrement dit, au cours de l'étape (ii), l'air ne circule pas lors de la circulation du fluide de lavage.

On comprend ainsi que les oxydes d'azote provenant de l'air sont récupérés par le fluide de lavage qui peut ensuite être valorisé.

Ce fluide de lavage est de préférence un liquide, avantageusement de l'eau.

L'unité de traitement peut être telle que précédemment décrite. De manière générale, on notera que l'étape de traitement, et donc l'une des étapes (i) et (ii), est mise en oeuvre lorsque l'unité de traitement est en fonctionnement. Lorsque l'unité de traitement est à l'arrêt, cette étape de traitement n'est pas mise en oeuvre, autrement dit, aucune des étapes (i) et (ii) n'est mise en oeuvre.

L'étape (i) de traitement de l'air peut être une étape d'adsorption des polluants de l'air (notamment NOx, mais aussi COV, particules, SOx, O$_3$) sur l'au moins un agent de traitement. Ce dernier peut être tel que déjà décrit.

On notera que les NOx adsorbés sont en général oxydés par le dioxygène en anions nitrates (NO$_3^-$) qui seront par la suite récupérés par le fluide de lavage.

L'étape (ii) de lavage pourra être suivie d'une étape de séchage, par exemple par circulation d'un fluide de séchage, généralement un fluide gazeux tel que l'air, optionnellement chauffé, au travers de l'au moins un agent de traitement.

Afin de compenser les pertes de charge induites par les différentes parties de l'installation (conduites, dispositifs de régulation de débit, unité de filtration, unité de traitement), on pourra augmenter la pression de l'air avant l'étape de traitement et plus précisément avant l'étape (i). A titre d'exemple, la pression de l'air entrant dans l'unité de traitement peut être de 1 à 1000Pa.

Avantageusement, le fluide de lavage sortant de l'unité de traitement à l'issue de l'étape (ii) peut être stocké, par exemple dans un réservoir, avant d'être envoyé à l'étape (c) de captation pour valorisation. Ceci permet de faciliter l'alimentation de l'étape (c) de captation en fluide de lavage, ce dernier ne sortant pas en continu de l'unité de traitement.

Avantageusement, au cours de l'étape (b) de traitement, on fait circuler le fluide de lavage à l'intérieur de l'unité de traitement en fonction de paramètres choisis parmi une durée de fonctionnement de l'unité de traitement, une information de saturation de l'unité de traitement, un état particulier de l'environnement.

<u>Etape de captation</u>

Au cours de cette étape (c), dans une unité de captation comprenant au moins un bioréacteur contenant des microalgues capables de convertir par photosynthèse du dioxyde de carbone et des oxydes d'azote en composés organiques :

- on convertit au moins en partie le carbone présent dans un flux d'air entrant dans l'unité de captation en composés organiques pour fournir un air à teneur réduite en particules, en NOx et en carbone,
- on alimente l'unité de captation avec le fluide de lavage avec une teneur augmentée en NOx produit lors de l'étape (ii) et on convertit au moins en partie les oxydes d'azotes présents dans le fluide de lavage en composés organiques pour fournir un fluide à teneur réduite en NOx.

L'unité de captation peut être telle que déjà décrite. Tel que déjà expliqué, la conversion du carbone et des oxydes d'azote (présents sous forme de nitrates) est réalisée par photosynthèse.

Dans un mode de réalisation préféré, une partie de l'air à teneur réduite en particules fournie par l'étape de filtration peut être envoyée directement à l'étape (c) de captation. Ceci permet de limiter le débit d'air entrant dans l'installation qui doit être traité par l'unité de captation.

Le débit de traitement d'un bioréacteur est en effet relativement faible, par exemple de 15 à 100 m$^3$/h par m$^3$ d'un bioréacteur, de sorte qu'il est peu envisageable de traiter une grande quantité d'air sortant de l'unité de filtration sans réduire considérablement la quantité d'air traitée par le procédé. Il est ainsi préférable de limiter la quantité d'air issu de l'unité de filtration envoyé à l'unité de captation. A titre d'exemple, on n'enverra à l'unité de captation que la quantité d'air nécessaire à la culture algale.

Avantageusement, afin de favoriser la culture algale, au cours de l'étape (c) de captation, on peut alimenter l'unité de captation en solution de nutriments azotés (par exemple des ions nitrates), notamment lorsque l'unité de captation n'est pas alimentée en fluide de lavage.

Avantageusement, au cours de l'étape (c) de captation, on peut réguler des conditions physicochimiques du ou des bioréacteurs (de leur milieu de culture) de l'unité de captation au moyen d'un système de régulation, tel que décrit par exemple dans le document WO2017077061 A1.

<u>Gestion du procédé</u>

Afin de limiter les coûts de fonctionnement, on pourra prévoir de suspendre les étapes de filtration et de traitement en arrêtant l'unité de filtration et l'unité de traitement lorsqu'une information de condition environnementale est reçue. Autrement dit, les étapes a) et b) du procédé ne sont alors mises en oeuvre que lorsqu'elles sont utiles, ce qui évite un vieillissement prématuré des unités de filtration et de traitement. Ces périodes d'arrêt peuvent être mises à profit pour régénérer l'au moins un agent de traitement en faisant circuler le fluide de lavage au travers de l'unité de traitement, cette circulation pouvant être suivie de la circulation d'un fluide de séchage. L'au moins un agent de traitement peut alors capter de manière optimale les polluants à la mise en service suivante de l'unité de traitement. L'étape de captation continue quant à elle d'être mise en oeuvre même lorsque les unités de filtration et de traitement sont à l'arrêt, au moins en ce qui concerne la conversion du carbone, et aussi en ce qui concerne la valorisation du fluide de lavage tant que celui-ci est disponible.

La gestion du procédé pourra être mise en oeuvre au moyen du système de commande précédemment décrit.

<u>Description d'un mode de réalisation</u>

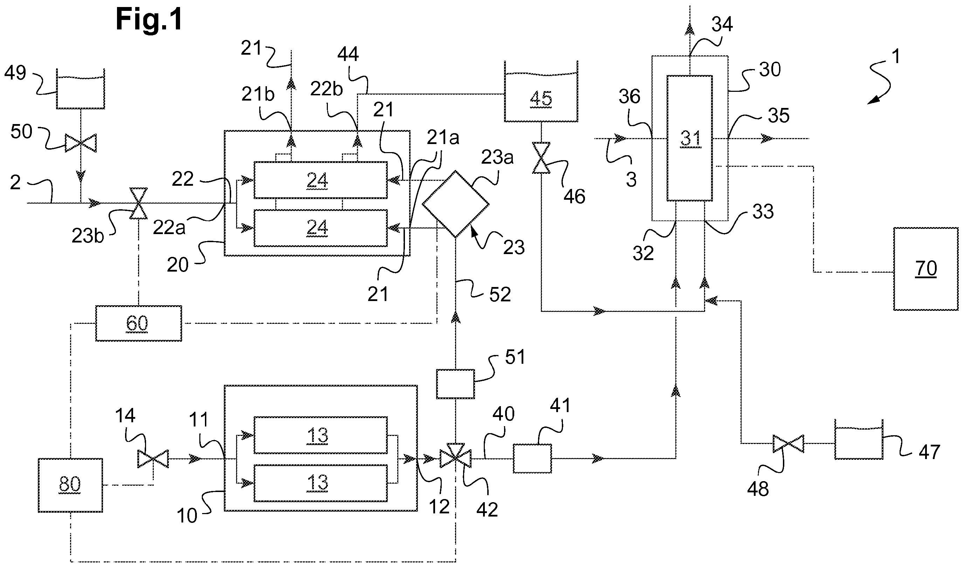

La figure 1 décrit un mode de réalisation d'une installation 1 comprenant une unité de filtration de particules 10, une unité de traitement 20 et une unité de captation de carbone 30.

L'unité de filtration de particules 10 comprend une entrée d'air 11 et une sortie d'air 12. Elle comprend un ou plusieurs modules de filtration 13, deux dans l'exemple, ici des électrofiltres.

L'unité de traitement 20 comprend un agent de traitement (non représenté) et deux circuits 21, 22 traversant cet agent de traitement. Un premier circuit d'air 21 comprend une entrée d'air 21a en connexion de fluide avec la sortie d'air 12 de l'unité de filtration 10 et une sortie d'air 21b. Un deuxième un circuit de fluide de lavage 22 comprend une entrée de fluide de lavage 22a et une sortie de fluide de lavage 22b. L'entrée de fluide de lavage 22a est par exemple reliée à un réseau d'eau par une conduite 2.

L'unité de traitement 20 comprend un ou plusieurs modules de traitement 24 par du charbon actif, ici deux.

L'unité de traitement 20 comprend également un système de régulation 23 du débit de circulation de fluide dans chaque circuit configuré de sorte que lorsque l'un des fluides circule dans un circuit, le fluide de l'autre circuit ne circule pas. Ce système de régulation 23 peut comprendre, comme dans l'exemple, un ou plusieurs clapets 23a (par exemple un clapet par module 24) en amont du circuit d'air 21 et une vanne 23b en amont du circuit de fluide de lavage 22.

L'unité de captation 30 du carbone et des oxydes d'azote comprend au moins un bioréacteur 31, ici un seul, contenant des microalgues capables de convertir par photosynthèse dioxyde de carbone et oxydes d'azote en composés organiques. Cette unité de captation 30 présente également une entrée d'air 32, une entrée de fluide 33 en connexion de fluide avec la sortie de fluide de lavage 22b de l'unité de traitement, une sortie d'air 34 et une sortie de fluide 35.

Dans l'exemple, l'unité de captation 30 comprend aussi une entrée 36 d'eau, par exemple reliée à un réseau d'eau par une conduite 3.

Bien entendu, l'invention n'est pas limitée à un nombre particulier de modules de filtration, de modules de traitement et de bioréacteurs.

Dans l'exemple représenté, une conduite de dérivation 40 relie la sortie d'air 12 de l'unité de filtration 10 à l'entrée d'air 32 de l'unité de captation. Un dispositif 41 de régulation du débit d'air circulant dans la conduite de dérivation, ici un compresseur, est également prévu sur la conduite de dérivation 40.

Un réservoir de stockage 45 du fluide de lavage est situé ici entre la sortie de fluide de lavage 22b de l'unité de traitement et l'entrée de fluide 33 de l'unité de captation. Un dispositif de régulation 46 du débit de fluide sortant du réservoir de stockage 45, par exemple une vanne ou une pompe, peut aussi être prévu.

Dans l'exemple, un réservoir 47 d'une solution de nutriments azotés, par exemple des ions nitrates, est en connexion de fluide avec l'unité de captation 30, et un dispositif de régulation de débit 48 régule le débit de solution entrant dans l'unité de captation.

Un dispositif de régulation de pression 51, ici une simple soufflante, est également prévu sur une conduite 52 reliant la sortie d'air 12 de l'unité de filtration et l'entrée d'air 21a de l'unité de traitement.

L'installation 1 comprend également un système de gestion 60 de l'unité de traitement 20 relié au système de régulation 23 du débit du fluide de lavage. Ce système de gestion 60 est configuré pour contrôler le débit du fluide de lavage à l'intérieur de l'unité de traitement en fonction de paramètres choisis parmi une durée de fonctionnement de l'unité de traitement, une information de saturation de l'unité de traitement, un état particulier de l'environnement.

L'installation 1 comprend également un système de régulation 70 des conditions physicochimiques du bioréacteur 31. Ce système de régulation 70 pourra être configuré en fonction des microalgues cultivées dans le bioréacteur afin d'optimiser le rendement en biomasse.

L'installation 1 comprend enfin un système de commande 80 du fonctionnement de chaque unité configuré pour arrêter le fonctionnement de l'unité de filtration et de l'unité de traitement lorsqu'une information de condition environnementale particulière est reçue, et optionnellement, faire circuler le fluide de lavage au travers de l'unité de traitement.

Ce système de commande 80 peut par exemple être relié au système de gestion 60 de l'unité de traitement et à un système de régulation 14 du débit d'air entrant dans l'unité de filtration 10, par exemple une vanne, ou à une vanne 42 permettant d'envoyer l'air sortant de l'unité de traitement vers l'unité de traitement 20 et l'unité de captation 30. Le système de commande 80 peut aussi être relié au système de régulation 70 du bioréacteur 31 (non représenté).

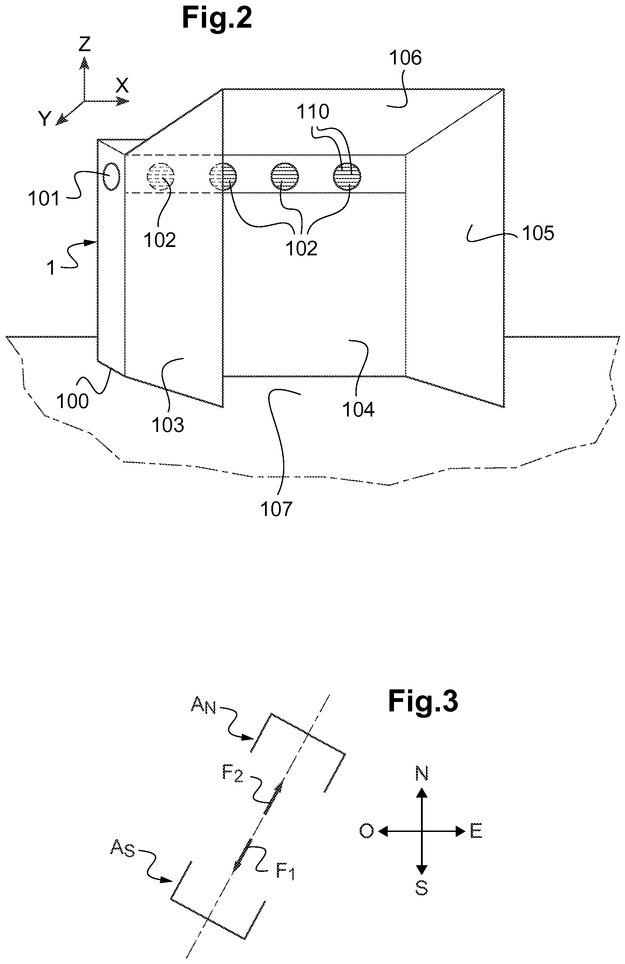

L'installation 1 représentée schématiquement figure 1 peut être disposée à l'intérieur d'une enceinte (ou caisson) 100, tel que représenté figure 2, par exemple une enceinte parallélépipédique, qui repose ici sur le sol. Cette enceinte 100 est équipée d'une ou plusieurs bouches d'entrée d'air 101 et de plusieurs bouches de sortie pour l'air purifié 102, ici quatre. Ces bouches de sortie d'air 102 sont en connexion de fluide avec la sortie d'air 21b de l'unité de traitement, et également de préférence aussi avec la sortie d'air 34 de l'unité de captation d'air. Bien entendu, l'invention n'est pas limitée par un nombre de bouches (d'ouvertures) d'entrée et de sortie de l'air, ni par une forme particulière de l'enceinte 100, ou une position particulière de cette dernière par rapport au sol.

Tel que représenté, l'installation 1 comprend plusieurs parois 103, 104, 105, 106 agencées autour des sorties d'air 102 de l'unité de traitement, les parois définissant un espace semi-confiné, notamment avec le sol 107. Ces parois 103-106 jouent le rôle de déflecteurs en orientant le flux d'air traité sortant à l'intérieur de l'espace semi-confiné. Dans l'exemple, la paroi de fond 104 fait partie de l'enceinte de l'installation, mais cela pourrait ne pas être le cas.

Dans l'exemple représenté, les bouches de sortie d'air sont équipées de lamelles 110 pour orienter le flux d'air dans des directions privilégiées à l'intérieur de l'espace semi-confiné.

## Exemple

Des simulations numériques ont été réalisées afin d'évaluer l'efficacité du procédé et de l'installation de l'invention pour la dépollution de l'air extérieur en milieu urbain dense.

Cette étude est basée sur l'utilisation d'un logiciel de modélisation de mécanique des fluides numérique (CFD, pour « *Computational Fluid Dynamics* ») qui permet de prendre en compte la complexité tridimensionnelle du site, la thermodynamique et la dispersion des concentrations des polluants. L'objectif est de cartographier l'impact du procédé et de l'installation de l'invention sur l'environnement atmosphérique à travers des modélisations atmosphériques comparatives.

Conditions de la simulation

Les polluants cibles sont des particules fines, ici les PM10 et PM2,5 (particules de diamètre moyen inférieur à $10\mu m$ et à $2,5\mu m$ respectivement) et des oxydes d'azotes (NOx) qui sont les émissions principales liées au trafic routier.

Une zone dans le quartier Montparnasse de Paris a été choisie comme domaine d'étude, avec des trafics importants et des rues enclavées par des grands bâtiments. Deux situations météorologiques ont été choisies pour la modélisation :

**Condition 1** : Vent du nord-est (NE), direction du vent 30°, vitesse du vent 2m/s;
**Condition 2** : Vent du sud-ouest (SO), direction du vent 210°, vitesse du vent 2 m/s.

Les émissions du trafic ont été estimées avec la méthodologie européenne COPERT V.

Les concentrations de fond ont été également prises en compte en utilisant les valeurs mesurées par les stations d'Airparif®. Le tableau 1 ci-dessous présente les concentrations des polluants en moyenne et en percentile 98 en 2017 mesurées par les stations d'Airparif® proches du quartier modélisé. Ces valeurs de concentrations seront utilisées comme des concentrations de fond dans cette étude.

Tableau 1

| Polluant | Valeur moyenne annuelle ($\mu g/m^3$) | Percentile 98 ($\mu g/m^3$) | Station Airparif® |
|---|---|---|---|
| **NOx** | 48 | 84 | Paris 13ème |
| **PM10** | 21 | 47 | Paris centre |
| **PM2,5** | 14 | 38 | Paris centre |

Le logiciel de modélisation utilisé est Code_Saturne, logiciel libre (Archambeau, F., Méchitoua, N., Sakiz, M. (2003). Int. J. Finite Volumes, 1, 1-62.) basé sur une approche en volumes finis co-localisés, acceptant différents types de maillages (structuré ou non, conforme ou non, etc.) composés de divers éléments (tétraèdre, hexaèdre, pyramide, etc.). Il résout les équations de Navier-Stokes pour différents régimes turbulents sous l'hypothèse d'incompressibilité et de transporter également des scalaires.

Une maquette numérique de la zone bâtie a été établie, aboutissant à un maillage de la géométrie considérée, qui comprend deux installations de l'invention sous forme d'abri bus. Ce maillage comporte 1 945 698 cellules avec 0,1 m comme taille de maille la plus petite. Le maillage est raffiné dans la zone d'intérêt et autours des obstacles.

Dans les simulations, on a considéré un abri bus comprenant trois parois verticales 103, 104, 105 fixées au sol perpendiculairement les unes aux autres afin de former un U, surmontées d'une paroi horizontale 106 formant un toit. Le toit est situé à 2,5m du sol, les parois verticales 103, 105 formant les ailes du U présentent chacune une largeur de 2m, la paroi verticale 105 de fond présentant une largeur de 4m. Un abri bus de cette forme est situé de chaque côté d'une rue d'orientation Nord-Ouest Sud-Est, selon la configuration représentée schématiquement figure 3, où $A_S$ et $A_N$ désignent les abris bus au sud et au nord respectivement, et les flèches F1 et F2 désignent le vent suivant les conditions 1 et 2 respectivement.

Les simulations ont été réalisées pour deux configurations d'abris bus avec l'installation de l'invention agencée dans un caisson situé sur le toit 106 de l'abri bus :

**Configuration 1** (figure 4): dans cette configuration, 100% du débit total est aspiré au niveau d'une face supérieure du caisson parallèle au toit 106 de l'abri bus. La sortie d'air filtré est localisée sur deux parois verticales 103, 104 adjacentes à l'intérieur de l'abri bus, avec une superficie d'environ 5m$^2$.

**Configuration 2** (figure 5): dans cette configuration, 100% du débit total est aspiré au niveau d'une paroi latérale du caisson. La sortie d'air, d'une superficie d'environ 2m$^2$, est déplacée sur la paroi du fond de l'abri bus et est à une hauteur de 1m à 1,5m par rapport au sol (hauteur de tête).

Simulations

1. Sans l'installation de l'invention

L'abri bus ne comprend alors pas le caisson situé sur le toit 106, il est composé uniquement des parois 103-106, sans entrée ou sortie d'air au niveau de ces parois. Ainsi, seul l'air ambiant circule autour de l'abri bus, cette circulation étant perturbée par l'abri bus qui forme un obstacle. Des champs de concentration pour les deux situations météorologiques (conditions 1 et 2) ont été modélisés pour les polluants NOx, PM10 et PM2,5, pour un abri bus tel que précédemment décrit.

Dans la condition 1, les fortes concentrations sont notamment observées à l'endroit de l'abri bus au sud ($A_S$). Au contraire, dans la condition 2, la pollution locale impacte les deux abris bus $A_S$ et $A_N$ situés des deux côtés de la rue (voir tableaux 2 à 4 ci-après).

2. Avec l'installation de l'invention

L'air entre alors par une face supérieure de l'installation 1 (figure 4) ou une face latérale de l'installation (figure 5).

On considère les taux d'abattement suivants pour les différents polluants au travers de l'installation de l'invention :

NOx : 0,21 % massique
PM10 : 70,27% massique
PM2,5 : 40,27% massique

Résultats

En comparant les champs de concentration entre « avec » et « sans » installation de l'invention, on observe l'effet de dépollution pour les trois polluants avec le système activé. Les champs de différence de concentration ont été simulés pour les deux situations météorologiques modélisées et pour les polluants NOx, PM10 et PM2,5. La différence de concentration est obtenue par :

Différence de concentration = concentration avec installation – concentration sans installation.

Les tableaux 2 à 4 montrent les valeurs de concentrations moyennes et les taux de dépollution à l'intérieur des abris bus pour les configurations 1 et 2. Dans la configuration 1, on a testé les conditions 1 et 2 de vent, avec un débit traité de 10000m$^3$/h. Dans la configuration 2, on a testé la condition 2 de vent, pour un débit traité de 10000m$^3$/h (Débit 100%) et un débit traité de 3300m$^3$/h (Débit 33,3%).

Les concentrations moyennes sont calculées sur le volume intérieur de l'abri bus (environ 2m x 4m x 2,5m). Les taux de dépollution sont ensuite déduits par : Taux de dépollution (%) = 100 x (Cm sans installation - Cm avec installation)/Cm sans installation, où *Cm* est la concentration moyenne.

Tableau 2 : *valeurs des concentrations moyennes et taux de dépollution en NOx*

| | | NOx | | |
|---|---|---|---|---|
| | | Avec installation ($\mu g/m^3$) | Sans Installation ($\mu g/m^3$) | Taux de dépollution |
| **Configuration 1** | | | | |
| Condition 1 | $A_N$ | 143,86 | 227,02 | **37%** |
| | $A_S$ | 393,07 | 541,99 | **27%** |
| Condition 2 | $A_N$ | 238,80 | 223,70 | **-7%** |
| | $A_S$ | 271,62 | 377,43 | **28%** |
| **Configuration 2** | | | | |
| Débit 100% | $A_N$ | 259,84 | 234,93 | **-11%** |
| | $A_S$ | 332,84 | 487,99 | **32%** |
| Débit 33,3% | $A_N$ | 245,82 | 234,93 | **-5%** |
| | $A_S$ | 344,66 | 487,99 | **29%** |

Tableau 3 : *valeurs des concentrations moyennes et taux de dépollution en PM10*

| | | PM10 | | |
|---|---|---|---|---|
| | | Avec installation ($\mu$g/m$^3$) | Sans Installation ($\mu$g/m$^3$) | Taux de dépollution |
| **Configuration 1** | | | | |
| Condition 1 | A$_N$ | 6,00 | 11,01 | **46%** |
| | A$_S$ | 17,36 | 21,05 | **18%** |
| Condition 2 | A$_N$ | 14,54 | 17,06 | **15%** |
| | A$_S$ | 9,09 | 18,23 | **50%** |
| **Configuration 2** | | | | |
| Débit 100% | A$_N$ | 16,73 | 31,77 | **47%** |
| | A$_S$ | 13,12 | 29,99 | **56%** |
| Débit 33,3% | A$_N$ | 20,65 | 31,77 | **35%** |
| | A$_S$ | 12,63 | 29,99 | **58%** |

Tableau 4 : *valeurs des concentrations moyennes et taux de dépollution en PM2,5*

| | | PM2,5 | | |
|---|---|---|---|---|
| | | Avec installation ($\mu$g/m$^3$) | Sans Installation ($\mu$g/m$^3$) | Taux de dépollution |
| **Configuration 1** | | | | |
| Condition 1 | A$_N$ | 6,46 | 9,12 | **29%** |
| | A$_S$ | 15,19 | 16,53 | **8%** |
| Condition 2 | A$_N$ | 12,69 | 13,17 | **4%** |
| | A$_S$ | 10,79 | 14,78 | **27%** |
| **Configuration 2** | | | | |
| Débit 100% | A$_N$ | 21,44 | 28,30 | **24%** |
| | A$_S$ | 19,43 | 27,05 | **28%** |
| Débit 33,3% | A$_N$ | 22,82 | 28,30 | **19%** |
| | A$_S$ | 18,87 | 27,05 | **30%** |

Les simulations avec la Configuration 1 et la Configuration 2 montrent qu'un abri bus à trois parois verticales en U permet de bien protéger les zones intérieures contre les pollutions du trafic.

Dans les deux configurations, on observe que l'efficacité de dépollution varie en fonction de la situation météorologique et de la position de l'abri bus par rapport à la direction du vent. En outre, à l'aide d'une représentation par isocontour de différences de concentration de PM10, on peut observer des bulles de dépollution à l'intérieur et devant les abris bus. Les formes de ces bulles dépendent fortement de champ de vent local.

*Configuration 1*

Pour les particules fines, on peut observer des valeurs positives de différences de concentration aux coins à l'intérieur de l'abri bus, dues notamment à la modification de l'écoulement local lors du fonctionnement de l'installation de l'invention. Les taux de dépollution à l'intérieur de l'abri bus peuvent atteindre jusqu'à 50% pour les PM10 et 29% pour les PM2,5.

*Configuration 2*

L'effet de dépollution peut être observé sur l'ensemble de la zone à l'intérieur de l'abri bus à la hauteur de 1,5m notamment pour les PM10 et les PM2,5. En diminuant le débit de 33,3%, l'effet de dépollution devient moins remarquable devant l'abri bus, mais reste significatif à l'intérieur de l'abri bus.

En ce qui concerne les NOx, l'effet de dépollution peut d'être observé dans l'abri bus au sud ($A_S$) pour les deux débits.

On constate que les zones de dépollutions sont mieux reparties à l'intérieur et devant l'abri bus avec la Configuration 2 du système de dépollution (sortie d'air à hauteur de tête d'homme). Pour les particules fines, on peut observer des valeurs positives de différences de concentration aux coins à l'intérieur de l'abri bus, ce qui est dû à l'effet de protection de l'abri bus et à la modification de l'écoulement local lors du fonctionnement de l'installation de l'invention.

L'efficacité de dépollution sur la couche à la hauteur de tête à l'intérieur de l'abri bus n'est pas sensible à la diminution de débit. Pour le débit 33,3%, les taux de dépollution sur cette couche peuvent atteindre 58% pour les PM10 et 30% pour les PM2,5.

On notera que ces résultats peuvent être obtenus pour une installation présentant un faible encombrement, pouvant être par exemple contenue dans une enceinte de dimensions 5m×3m×1m. En outre, l'installation selon l'invention utilisant l'eau uniquement pour régénérer l'agent de traitement et non pour traiter des polluants de l'air en tant que tels, la consommation d'eau de l'installation est faible, de l'ordre de 300L/semaine (hormis l'eau utilisée pour l'unité de captation).

**Revendications**

1. Installation d'épuration d'air (1) comprenant :

   • une unité de filtration (10) de particules comprenant une entrée d'air (11) et une sortie d'air (12), ladite unité étant apte à retenir au moins en partie les particules présentes dans l'air entrant pour fournir en sortie un air à teneur réduite en particules,
   • une unité de traitement (20) comprenant au moins un agent de traitement, et :

      - deux circuits de fluide traversant l'au moins un agent de traitement :

         - un circuit d'air (21) comprenant une entrée d'air (21a) en connexion de fluide avec la sortie d'air (12) de l'unité de filtration (10) et une sortie d'air (21b), et
         - un circuit de fluide de lavage (22) comprenant une entrée de fluide de lavage (22a) et une sortie de fluide de lavage (22b),
         - un système de régulation (23) du débit de circulation de fluide dans chacun des circuits configuré de sorte que lorsque le fluide de l'un des circuit circule, le fluide de l'autre circuit ne circule pas,
         l'au moins un agent de traitement étant apte à capturer au moins une partie des oxydes d'azote (NOx) présents dans l'air entrant pour fournir en sortie un air à teneur réduite en NOx, le fluide de lavage sortant de l'unité de traitement avec une teneur augmentée en NOx,

   • une unité de captation (30) du carbone et des oxydes d'azote comprenant au moins un bioréacteur (31) contenant des microalgues capables de convertir par photosynthèse du dioxyde de carbone et des oxydes d'azote en composés organiques, l'unité de captation présentant une entrée d'air (32), une entrée de fluide (33) en connexion de fluide avec la sortie de fluide de lavage (22b) de l'unité de traitement, une sortie d'air (34) et une sortie de fluide (35), l'air sortant de l'unité de captation présentant une teneur réduite en carbone, notamment en $CO_2$, le fluide sortant de l'unité de captation présentant une teneur réduite en NOx.

2. Installation (1) selon la revendication 1, **caractérisée en ce qu'**une conduite de dérivation (40) relie la sortie d'air (12) de l'unité de filtration (10) à l'entrée d'air (32) de l'unité de captation, l'installation comprenant un dispositif de régulation du débit d'air (41) circulant dans la conduite de dérivation.

3. Installation (1) selon la revendication 1 ou 2, **caractérisée en ce qu'**elle comprend au moins un réservoir (47) d'une solution de nutriments azotés en connexion de fluide avec l'unité de captation (30) et un dispositif de régulation de débit (48) régulant le débit en solution de nutriments azotés entrant dans l'unité de captation (30).

4. Installation (1) selon l'une quelconque des revendications 1 à 3, **caractérisée en ce qu'**elle comprend un réservoir de stockage (45) du fluide de lavage sortant de l'unité de traitement (20), situé en amont de l'unité de captation (30).

5. Installation (1) selon l'une quelconque des revendications 1 à 4, **caractérisée en ce qu'**elle comprend au moins un dispositif de régulation de pression (51, 41) prévu sur une conduite en aval de la sortie d'air (12) de l'unité de filtration (10) et en amont de l'entrée d'air d'une unité choisie parmi l'unité de traitement (20) et l'unité de captation (30).

6. Installation (1) selon l'une quelconque des revendications 1 à 5, comprenant au moins une des caractéristiques suivantes :

   - l'unité de filtration (10) comprend au moins un filtre choisi parmi un électrofiltre, notamment à ionisation positive, un filtre cyclonique, un filtre à voie humide, un filtre à média filtrant,
   - l'au moins un agent de traitement de l'unité de traitement (20) est un matériau adsorbant choisi parmi le charbon, notamment le charbon actif, un oxyde métallique, un oxyde d'aluminium, un oxyde de silicium, une zéolithe, une résine macroporeuse anionique.

7. Installation (1) selon l'une quelconque des revendications 1 à 6, **caractérisée en ce qu'**elle comprend au moins un système choisi parmi :

   - un système de gestion (60) de l'unité de traitement (20) relié au système de régulation du débit (23) de circulation de fluide, le système de gestion étant configuré pour contrôler le débit du fluide de lavage à l'intérieur de l'unité de traitement en fonction de paramètres choisis parmi une durée de fonctionnement de l'unité de traitement, une information de saturation de l'unité de traitement, un état particulier de l'environnement,
   - un système de régulation (70) des conditions physicochimiques dudit au moins un bioréacteur (31).

8. Installation (1) selon l'une quelconque des revendications 1 à 7, comprenant un système de commande (80) du fonctionnement de chaque unité configuré pour arrêter le fonctionnement de l'unité de filtration (10) et de l'unité de traitement (20) lorsqu'une information de condition environnementale prédéterminée est reçue, et optionnellement, pour faire circuler le fluide de lavage au travers de l'unité de traitement (20).

9. Installation (1) selon l'une quelconque des revendications 1 à 8, comprenant au moins un déflecteur d'air (103-108, 110) configuré pour diriger l'air dans une direction privilégiée, l'au moins un déflecteur étant agencé à proximité de, ou au travers, d'une ouverture (101, 102) choisie parmi une entrée d'air à traiter de l'installation et une sortie d'air traité de l'installation.

10. Procédé d'épuration d'air comprenant :

    (a) une étape de filtration de particules au cours de laquelle on filtre au moins une partie des particules présentes dans l'air à épurer dans une unité de filtration pour fournir un air à teneur réduite en particules,
    (b) une étape de traitement d'au moins une partie de l'air à teneur réduite en particules au cours de laquelle :

       (i) on traite l'air à teneur réduite en particules en capturant au moins une partie des oxydes d'azote (NOx) présents pour fournir un air à teneur réduite en NOx, en faisant circuler l'air au travers d'au moins un agent de traitement dans une unité de traitement,
       (ii) lorsque l'étape (i) n'est pas mise en oeuvre, on lave l'au moins un agent de traitement en faisant circuler un fluide de lavage au travers de l'au moins un agent de traitement de l'unité de traitement pour fournir un fluide de lavage avec une teneur augmentée en NOx,

    (c) une étape de captation du carbone et des oxydes d'azote au cours de laquelle, dans une unité de captation comprenant au moins un bioréacteur contenant des microalgues capables de convertir par photosynthèse du dioxyde de carbone et des oxydes d'azote en composés organiques :

       - on convertit au moins en partie le carbone présent dans un flux d'air entrant dans l'unité de captation pour fournir un air à teneur réduite en carbone, avantageusement aussi en particules et en NOx,
       - on alimente l'unité de captation avec le fluide de lavage avec une teneur augmentée en NOx produit lors de l'étape (ii) et on convertit au moins en partie les oxydes d'azotes présents dans le fluide de lavage pour fournir un fluide à teneur réduite en NOx.

11. Procédé d'épuration d'air selon la revendication 10, dans lequel une partie de l'air à teneur réduite en particules fournie par l'étape de filtration est envoyée directement à l'étape (c) de captation.

**12.** Procédé d'épuration d'air selon la revendication 10 ou 11, dans lequel, au cours de l'étape (c) de captation, on alimente l'unité de captation en solution de nutriments azotés.

**13.** Procédé d'épuration d'air selon l'une quelconque des revendications 10 à 12, comprenant au moins une des caractéristiques suivantes :

   - on augmente la pression de l'air avant une étape choisie parmi l'étape de traitement ou l'étape de captation,
   - on stocke le fluide de lavage sortant de l'unité de traitement avant de l'envoyer à l'étape (c) de captation.

**14.** Procédé d'épuration d'air selon l'une quelconque des revendications 10 à 13, comprenant au moins une des caractéristiques suivantes :

   - l'étape (a) de filtration comprend au moins une étape choisie parmi une étape d'électrofiltration, notamment par ionisation positive, une étape de séparation cyclonique, une étape de filtration par voie humide, une étape de filtration sur média filtrant,
   - l'au moins un agent de traitement utilisé lors de l'étape (b) de traitement est un matériau adsorbant choisi parmi le charbon, notamment le charbon actif, un oxyde métallique, un oxyde d'aluminium, un oxyde de silicium, une zéolithe, une résine macroporeuse anionique.

**15.** Procédé d'épuration d'air selon l'une quelconque des revendications 10 à 14, comprenant au moins une des caractéristiques suivantes :

   - au cours de l'étape (b) de traitement, on fait circuler le fluide de lavage à l'intérieur de l'unité de traitement en fonction de paramètres choisis parmi une durée de fonctionnement de l'unité de traitement, une information de saturation de l'unité de traitement, un état particulier de l'environnement,
   - au cours de l'étape (c) de captation, on régule des conditions physicochimiques dudit au moins un bioréacteur de l'unité de captation .

**16.** Procédé d'épuration d'air selon l'une quelconque des revendications 10 à 15, dans lequel on suspend les étapes de filtration et de traitement en arrêtant l'unité de filtration et l'unité de traitement lorsqu'une information de condition environnementale est reçue, et optionnellement, on fait circuler le fluide de lavage au travers de l'unité de traitement.

**Patentansprüche**

**1.** Luftreinigungsanlage (1), umfassend

   - eine Partikelfiltereinheit (10) mit einem Lufteinlass (11) und einem Luftauslass (12), wobei die Einheit geeignet ist, die in der einströmenden Luft vorhandenen Partikel zumindest teilweise zurückzuhalten, um am Ausgang eine Luft mit reduziertem Partikelgehalt zu liefern,
   - eine Behandlungseinheit (20), die mindestens ein Behandlungsmittel umfasst, und:

      - zwei Fluidkreisläufe, die durch das mindestens eine Behandlungsmittel führen:

         - einen Luftkreislauf (21), der einen Lufteinlass (21a) in Fluidverbindung mit dem Luftauslass (12) der Filtereinheit (10) und einen Luftauslass (21b) umfasst, und
         - einen Waschfluidkreislauf (22) mit einem Waschfluideinlass (22a) und einem Waschfluidauslass (22b),

      - ein System zur Regulierung (23) der Fluidzirkulationsrate in jedem der Kreisläufe, das so konfiguriert ist, dass, wenn das Fluid in einem der Kreisläufe zirkuliert, das Fluid in dem anderen Kreislauf nicht zirkuliert, wobei das mindestens eine Behandlungsmittel in der Lage ist mindestens einen Teil der in der eintretenden Luft vorhandenen Stickoxide (NOx) aufzufangen, um am Luftauslass eine Luft mit verringertem NOx-Gehalt zu liefern, wobei das Waschfluid aus der Behandlungseinheit mit einem erhöhten NOx-Gehalt austritt,

      - eine Auffangeinheit (30) für Kohlenstoff und Stickoxide, die mindestens einen Bioreaktor (31) umfasst, der Mikroalgen enthält, die Kohlendioxid und Stickoxide durch Photosynthese in organische Verbindungen umwandeln können, wobei die Auffangeinheit einen Lufteinlass (32), einen Fluideinlass (33) in Fluidverbindung mit dem Waschfluidauslass (22b) der Behandlungseinheit, einen Luftauslass (34) und einen Fluidauslass (35) umfasst, wobei die aus der Auffangeinheit austretende Luft einen reduzierten Gehalt an Kohlenstoff, insbesondere $CO_2$, aufweist, während das aus der Auffangeinheit austretende Fluid einen reduzierten Gehalt an NOx aufweist.

2. Anlage (1) nach Anspruch 1, **dadurch gekennzeichnet, dass** eine Bypassleitung (40) den Luftauslass (12) der Filtereinheit (10) mit dem Lufteinlass (32) der Auffangeinheit verbindet, wobei die Anlage eine Vorrichtung zur Regulierung des Luftstroms (41) umfasst, der in der Bypassleitung zirkuliert.

3. Anlage (1) nach Anspruch 1 oder 2, **dadurch gekennzeichnet, dass** sie mindestens ein Reservoir (47) einer stickstoffhaltigen Nährstofflösung in Fluidverbindung mit der Auffangeinheit aufweist (30) und einer Durchflussregelungsvorrichtung (48), die den Durchfluss der in die Auffangeinheit (30) eintretenden stickstoffhaltigen Nährstofflösung regelt.

4. Anlage (1) nach einem der Ansprüche 1 bis 3, **dadurch gekennzeichnet, dass** sie ein Speicherreservoir (45) für das aus der Behandlungseinheit (20) austretende Waschfluid umfasst, das sich stromaufwärts von der Auffangeinheit (30) befindet.

5. Anlage (1) nach einem der Ansprüche 1 bis 4, **dadurch gekennzeichnet, dass** sie mindestens eine Druckregulierungsvorrichtung (51, 41) umfasst, die in einer Leitung stromabwärts des Luftauslasses (12) der Filtereinheit (10) und stromaufwärts des Lufteinlasses einer Einheit vorgesehen ist, die aus der Behandlungseinheit (20) und der Auffangeinheit (30) ausgewählt wird.

6. Anlage (1) nach einem der Ansprüche 1 bis 5, die mindestens eines der folgenden Merkmale aufweist:

   - die Filtereinheit (10) umfasst mindestens einen Filter, der aus einem Elektrofilter, insbesondere einem Filter mit positiver Ionisation, einem Zyklonfilter, einem Nassfilter und einem Filter mit Filtermedien ausgewählt wird,
   - das mindestens eine Behandlungsmittel der Behandlungseinheit (20) ist ein Adsorptionsmaterial, das aus Kohle, insbesondere Aktivkohle, einem Metalloxid, einem Aluminiumoxid, einem Siliziumoxid, einem Zeolith, einem anionischen makroporösen Harz ausgewählt wird.

7. Anlage (1) nach einem der Ansprüche 1 bis 6, **dadurch gekennzeichnet, dass** sie mindestens ein System umfasst, das ausgewählt wird aus:

   - einem Managementsystem (60) der Behandlungseinheit (20), das mit dem System zur Regulierung des Durchflusses (23) des Fluidumlaufs verbunden ist, wobei das Managementsystem so konfiguriert ist, dass es den Durchfluss des Waschfluids innerhalb der Behandlungseinheit in Abhängigkeit von Parametern steuert, die aus einer Betriebsdauer der Behandlungseinheit, einer Sättigungsinformation der Behandlungseinheit, einem bestimmten Zustand der Umgebung ausgewählt werden,
   - einem System zur Regulierung (70) der physikochemischen Bedingungen des mindestens einen Bioreaktors (31).

8. Anlage (1) nach einem der Ansprüche 1 bis 7, mit einem System zur Steuerung (80) des Betriebs jeder Einheit, das so konfiguriert ist, dass es den Betrieb der Filtereinheit (10) und der Behandlungseinheit (20) stoppt, wenn eine vorbestimmte Umgebungsbedingungsinformation empfangen wird, und optional, um das Waschfluid durch die Behandlungseinheit (20) zirkulieren zu lassen.

9. Anlage (1) nach einem der Ansprüche 1 bis 8, mit mindestens einem Luftdeflektor (103-108, 110), der so konfiguriert ist, dass er die Luft in eine bevorzugte Richtung leitet, wobei der mindestens eine Deflektor in der Nähe einer Öffnung (101, 102) oder durch diese hindurch angeordnet ist, die aus einem Einlass für zu behandelnde Luft der Anlage und einem Auslass für behandelte Luft der Anlage ausgewählt wird.

10. Luftreinigungsverfahren, umfassend:

   (a) einen Partikelfiltrationsschritt, bei dem mindestens ein Teil der in der zu reinigenden Luft vorhandenen Partikel in einer Filtereinheit gefiltert wird, um Luft mit reduziertem Partikelgehalt bereitzustellen,
   (b) einen Schritt zur Behandlung mindestens eines Teils der Luft mit reduziertem Partikelgehalt, der Folgendes beinhaltet:

(i) Behandeln der Luft mit reduziertem Partikelgehalt durch Abfangen mindestens eines Teils der vorhandenen Stickoxide (NOx), um Luft mit reduziertem NOx-Gehalt bereitzustellen, indem die Luft durch mindestens ein Behandlungsmittel in einer Behandlungseinheit geleitet wird,
(ii) wenn Schritt (i) nicht erfolgt, wird das mindestens eine Behandlungsmittel gewaschen, indem ein Waschfluid durch das mindestens eine Behandlungsmittel der Behandlungseinheit geleitet wird, um ein Waschfluid mit einem erhöhten NOx-Gehalt bereitzustellen,

(c) einen Schritt zum Auffangen von Kohlenstoff und Stickoxiden, während dessen in einer Auffangeinheit, die mindestens einen Bioreaktor umfasst, der Mikroalgen enthält, die Kohlendioxid und Stickoxide durch Photosynthese in organische Verbindungen umwandeln können:

- der in einem Luftstrom, der in die Auffangeinheit eintritt, vorhandene Kohlenstoff wird zumindest teilweise umgewandelt, um Luft mit einem verringerten Kohlenstoffgehalt, vorteilhafterweise auch mit einem verringerten Gehalt an Partikeln und NOx, bereitzustellen,
- das Waschfluid mit einem erhöhten Gehalt an in Schritt (ii) erzeugtem NOx wird in die Auffangeinheit eingespeist und die in dem Waschfluid vorhandenen Stickoxide werden zumindest teilweise umgewandelt, um ein Fluid mit verringertem NOx-Gehalt bereitzustellen.

11. Luftreinigungsverfahren nach Anspruch 10, bei dem ein Teil der durch den Filterschritt bereitgestellten Luft mit reduziertem Partikelgehalt direkt zum Auffangschritt (c) geleitet wird.

12. Luftreinigungsverfahren nach Anspruch 10 oder 11, bei dem während des Schritts (c) des Auffangens der Auffangeinheit eine stickstoffhaltige Nährstofflösung zugeführt wird.

13. Luftreinigungsverfahren nach einem der Ansprüche 10 bis 12, umfassend mindestens eines der folgenden Merkmale:

- der Luftdruck vor einem Schritt, der aus dem Behandlungsschritt oder dem Auffangschritt ausgewählt wird, wird erhöht,
- man speichert das aus der Behandlungseinheit austretende Waschfluid, bevor man es zu Schritt (c) des Auffangens schickt.

14. Luftreinigungsverfahren nach einem der Ansprüche 10 bis 13, umfassend mindestens eines der folgenden Merkmale:

- der Schritt (a) des Filterns enthält mindestens einen Schritt, der aus einem Schritt der Elektrofiltration, insbesondere durch positive Ionisation, einem Schritt der Zyklonentrennung, einem Schritt der Nassfiltration und einem Schritt der Filtermedienfiltration ausgewählt wird,
- das mindestens eine in Behandlungsschritt (b) verwendete Behandlungsmittel ist ein Adsorptionsmaterial, das aus Kohle, insbesondere Aktivkohle, einem Metalloxid, einem Aluminiumoxid, einem Siliziumoxid, einem Zeolith und einem anionischen makroporösen Harz ausgewählt wird.

15. Luftreinigungsverfahren nach einem der Ansprüche 10 bis 14, umfassend mindestens eines der folgenden Merkmale:

- während des Behandlungsschritts (b) wird das Waschfluid im Inneren der Behandlungseinheit in Abhängigkeit von Parametern umgewälzt, die aus einer Betriebsdauer der Behandlungseinheit, einer Sättigungsinformation der Behandlungseinheit und einem besonderen Zustand der Umgebung ausgewählt werden,
- während des Schritts (c) des Auffangens werden die physicochemischen Bedingungen des mindestens einen Bioreaktors der Auffangeinheit reguliert.

16. Luftreinigungsverfahren nach einem der Ansprüche 10 bis 15, wobei die Filter- und Behandlungsschritte durch Anhalten der Filtereinheit und der Behandlungseinheit ausgesetzt werden, wenn eine Information über den Umgebungszustand empfangen wird, und optional das Waschfluid durch die Behandlungseinheit geleitet wird.

**Claims**

1. An air purification installation (1) comprising:

- a particle filtration unit (10) comprising an air inlet (11) and an air outlet (12), said unit being capable of retaining at least some of the particles present in the incoming air in order to provide an air outlet with a reduced particle content,
• a treatment unit (20) comprising at least one treatment agent, and:

- two fluid circuits passing through at least one treatment agent:

- an air circuit (21) comprising an air inlet (21a) in fluid connection with the air outlet (12) of the filtration unit (10) and an air outlet (21b), and
- a washing fluid circuit (22) comprising a washing fluid inlet (22a) and a washing fluid outlet (22b),

- a system (23) for regulating the fluid flow rate in each of the circuits configured so that when the fluid in one of the circuits is flowing, the fluid in the other circuit is not flowing, with at least one treatment agent being capable of capturing at least some of the nitrogen oxides (NOx) present in the incoming air in order to supply air with a reduced NOx content at the outlet, the washing fluid leaving the treatment unit with an increased NOx content,

• a unit (30) for capturing carbon and nitrogen oxides, comprising at least one bioreactor (31) containing microalgae capable of converting carbon dioxide and nitrogen oxides into organic compounds by photosynthesis, the capturing unit having an air inlet (32), a fluid inlet (33) in fluid connection with the washing fluid outlet (22b) of the treatment unit, an air outlet (34) and a fluid outlet (35), the air leaving the capturing unit having a reduced carbon content, in particular of $CO_2$, the fluid leaving the capturing unit having a reduced NOx content.

2. An installation (1) according to Claim 1, **characterised in that** a bypass pipe (40) connects the air outlet (12) of the filtration unit (10) to the air inlet (32) of the capturing unit, the installation comprising a device for regulating the flow of air (41) circulating in the bypass pipe.

3. An installation (1) according to Claim 1 or 2, **characterised in that** it comprises at least one reservoir (47) of a solution of nitrogenous nutrients in fluid connection with the capturing unit (30) and a flow-regulation device (48) regulating the flow of nitrogenous nutrient solution entering the capturing unit (30).

4. An installation (1) according to any one of claims 1 to 3, **characterised in that** it comprises a storage tank (45) for the washing fluid leaving the treatment unit (20), located upstream of the capturing unit (30).

5. An installation (1) according to any one of claims 1 to 4, **characterised in that** it comprises at least one pressure regulating device (51, 41) provided on a pipe downstream of the air outlet (12) of the filtration unit (10) and upstream of the air inlet of a unit chosen from the treatment unit (20) and the capturing unit (30).

6. An installation (1) according to any one of claims 1 to 5, comprising at least one of the following features:

- the filtration unit (10) comprises at least one filter selected from an electrofilter, in particular a positive ionisation filter, a cyclonic filter, a wet filter and a filtration media filter,
- at least one treatment agent of the treatment unit (20) is an adsorbent material chosen from carbon, in particular activated carbon, a metal oxide, an aluminium oxide, a silicon oxide, a zeolite or an anionic macroporous resin.

7. An installation (1) according to any one of claims 1 to 6, **characterized in that** it further comprises at least one system chosen from amongst:

- a management system (60) for the treatment unit (20) connected to the system for regulating the flow rate (23) of fluid circulation, the management system being configured to control the flow rate of washing fluid inside the treatment unit as a function of parameters selected from an operating time of the treatment unit, saturation information for the treatment unit and a particular state of the environment,
- a system (70) for regulating the physicochemical conditions of at least one bioreactor (31).

8. An installation (1) according to any one of claims 1 to 7, comprising a system (80) for controlling the operation of each unit configured to stop the operation of the filtration unit (10) and the treatment unit (20) when predetermined environmental condition information is received, and optionally, to circulate the washing fluid through the treatment unit (20).

9. An installation (1) according to any one of claims 1 to 8, comprising at least one air deflector (103-108, 110) configured to direct the air in a preferred direction, the at least one deflector being arranged close to, or through, an opening (101, 102) selected from an inlet for air to be treated from the installation and an outlet for treated air from the installation.

10. An air purification process comprising:

   (a) a particle filtration step in which at least some of the particles present in the air to be cleaned are filtered in a filtration unit to provide air with a reduced particle content,
   (b) a step for treating at least part of the air with a reduced particulate content, during which:

   (i) treating the particulate-reduced air by capturing at least some of the nitrogen oxides (NOx) present to provide NOx-reduced air by circulating the air through at least one treatment agent in a treatment unit,
   (ii) when step (i) is not carried out, washing must take place with at least one treatment agent by circulating a washing fluid through at least one treatment agent of the treatment unit to provide a washing fluid with an increased NOx content,

   (c) a step for capturing carbon and nitrogen oxides during which, in a capturing unit comprising at least one bioreactor containing microalgae capable of converting carbon dioxide and nitrogen oxides into organic compounds by photosynthesis:

   - at least some of the carbon present in an air stream entering the capture unit is converted to provide air with a reduced carbon content, as well as advantageously reduced particulate matter and NOx,
   - the washing fluid with an increased NOx content produced during step (ii) is fed to the capture unit and at least some of the nitrogen oxides present in the washing fluid are converted to provide a fluid with a reduced NOx content.

11. An air purification process as claimed in claim 10, wherein a portion of the reduced particulate air supplied by the filtration step is sent directly to the capture step (c).

12. An air purification process according to claim 10 or 11, in which, during capture step (c), the capture unit is supplied with a solution of nitrogenous nutrients.

13. An air purification process according to any one of claims 10 to 12, comprising at least one of the following features:

   - the air pressure is increased before a step chosen from the treatment step or the capture step,
   - the washing fluid leaving the treatment unit is stored before being sent to the capture step (c).

14. An air purification process according to any one of claims 10 to 13, comprising at least one of the following features:

   - a filtration step (a) which comprises at least one step selected from an electrofiltration step, in particular by positive ionisation, a cyclonic separation step, a wet filtration step and a filtration step on filter media,
   - at least one treatment agent used in the treatment step (b) is an adsorbent material chosen from carbon, in particular activated carbon, a metal oxide, an aluminium oxide, a silicon oxide, a zeolite or an anionic macroporous resin.

15. An air purification process according to any one of claims 10 to 14, comprising at least one of the following features:

   - during treatment step (b), the washing fluid is circulated inside the treatment unit as a function of parameters selected from an operating time of the treatment unit, saturation information for the treatment unit and a particular state of the environment,
   - during the capture step (c), the physicochemical conditions of at least one bioreactor of the capture unit are regulated.

16. An air purification process according to any one of claims 10 to 15, wherein the filtration and treatment steps are suspended by stopping the filtration unit and the treatment unit when environmental condition information is received, and optionally, the washing fluid is circulated through the treatment unit.

Fig.1

EP 4 106 904 B1

# Fig.2

# Fig.3

**Fig.4**

**Fig.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013011448 A
- WO 2018060197 A
- WO 2019121933 A
- WO 2017077061 A
- EP 3446772 A
- WO 9822201 A
- FR 3061030
- WO 2017077061 A1
- WO 2013011448 A1
- WO 2018060197 A1

**Littérature non-brevet citée dans la description**

- **ARCHAMBEAU, F. ; MÉCHITOUA, N. ; SAKIZ, M.** Int. J. Finite Volumes. 2003, vol. 1, 1-62